(19) Europäisches Patentamt
European Patent Office
Office européen des brevets

(11) EP 3 006 541 B1

(12) # EUROPEAN PATENT SPECIFICATION

(45) Date of publication and mention of the grant of the patent:
**18.10.2017 Bulletin 2017/42**

(21) Application number: **14804176.7**

(22) Date of filing: **25.03.2014**

(51) Int Cl.:
*C09K 19/30* (2006.01) *C09K 19/12* (2006.01)
*C09K 19/16* (2006.01) *C09K 19/20* (2006.01)
*C09K 19/34* (2006.01) *C09K 19/42* (2006.01)
*G02F 1/13* (2006.01) *C09K 19/02* (2006.01)
*C09K 19/04* (2006.01) *C09K 19/46* (2006.01)

(86) International application number:
**PCT/JP2014/058256**

(87) International publication number:
**WO 2014/192390 (04.12.2014 Gazette 2014/49)**

(54) **LIQUID CRYSTAL COMPOSITION AND LIQUID CRYSTAL DISPLAY**

FLÜSSIGKRISTALLZUSAMMENSETZUNG UND FLÜSSIGKRISTALLANZEIGEVORRICHTUNG

COMPOSITION À BASE DE CRISTAUX LIQUIDES ET DISPOSITIF D'AFFICHAGE À BASE DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2013 JP 2013112258**

(43) Date of publication of application:
**13.04.2016 Bulletin 2016/15**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **SAITO Masayuki**
  **Ichihara-shi**
  **Chiba 290-8551 (JP)**
- **FURUSATO Yoshimasa**
  **Ichihara-shi**
  **Chiba 290-8551 (JP)**

(74) Representative: **Thurston, Joanna**
**Withers & Rogers LLP**
**4 More London Riverside**
**London SE1 2AU (GB)**

(56) References cited:
**JP-A- 2007 291 338** **JP-A- 2007 501 301**
**JP-A- 2008 525 331** **JP-A- 2012 007 020**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 006 541 B1

## Description

### Technical Field

The invention relates to a liquid crystal composition, a liquid crystal display device including the composition and so forth. In particular, the invention relates to a liquid crystal composition having a positive dielectric anisotropy, and an active matrix (AM) device that includes the liquid crystal composition and has a mode such as a TN mode, an OCB mode, an IPS mode and a FFS mode or a FPA mode.

### Background Art

In a liquid crystal display device, a classification based on an operating mode for liquid crystals includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) and a field induced photo-reactive alignment (FPA) mode. A classification based on a driving mode in the device includes a passive matrix (PM) and an active matrix (AM) . The PM is classified into static and multiplex and so forth. The AM is classified into a thin film transistor (TFT), a metal insulator metal (MIM) and so forth. The TFT is further classified into amorphous silicon and polycrystal silicon. The latter is classified into a high temperature type and a low temperature type based on a production process. A classification based on a light source includes a reflection type utilizing natural light, a transmissive type utilizing backlight and a transreflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship of the characteristics between two aspects. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the liquid crystal composition relates to a response time of the device. A short response time is preferred for displaying moving images on the device. A shorter response time even by one millisecond is desirable. Accordingly, a small viscosity of the composition is preferred. A small viscosity at a low temperature is further preferred. An elastic constant of the composition relates to a contrast in the device. A large elastic constant in the composition is further preferred for increasing contrast in the device.

Table 1. Characteristics of Composition and AM Device

| No. | Characteristics of Composition | Characteristics of AM Device |
|---|---|---|
| 1 | Wide temperature range of a nematic phase | Wide usable temperature range |
| 2 | Small viscosity[1)] | Short response time |
| 3 | Suitable optical anisotropy | Large contrast ratio |
| 4 | Large positive or negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio Short response time |
| 1) A liquid crystal composition can be injected into a liquid crystal display device in a short time. | | |

An optical anisotropy of the composition relates to a contrast ratio in the device. According to a mode of the device, a large optical anisotropy or a small optical anisotropy, more specifically, a suitable optical anisotropy is required. A product ($\Delta n \times d$) of the optical anisotropy ($\Delta n$) of the composition and a cell gap (d) in the device is designed so as to maximize the contrast ratio. A suitable value of the product depends on a type of the operating mode. In a device having a TN mode or the like, the suitable value is about 0.45 micrometer. In the above case, a composition having the large optical anisotropy is preferred for a device having a small cell gap. A large dielectric anisotropy in the composition

contributes to a low threshold voltage, a small electric power consumption and a large contrast ratio in the device. Accordingly, the large dielectric anisotropy is preferred. A large specific resistance in the composition contributes to a large voltage holding ratio and the large contrast ratio in the device. Accordingly, a composition having a large specific resistance at room temperature and also at a temperature close to the maximum temperature of the nematic phase in an initial stage is preferred. A composition having a large specific resistance at room temperature and also at a temperature close to the maximum temperature of the nematic phase after the device has been used for a long period of time is preferred. Stability of the composition to ultraviolet light and heat relates to a service life of the liquid crystal display device. In the case where the stability is high, the device has a long service life. Such characteristics are preferred for an AM device used in a liquid crystal projector, a liquid crystal television and so forth.

A composition having a positive dielectric anisotropy is used for an AM device having the TN mode. In an AM device having the VA mode, a composition having a negative dielectric anisotropy is used. A composition having a positive or negative dielectric anisotropy is used for an AM device having the IPS mode or the FFS mode. In an AM device having a polymer sustained alignment (PSA) mode, the composition having the positive or negative dielectric anisotropy is used. Examples of the liquid crystal compositions having the positive dielectric anisotropy are disclosed in following Patent literature No. 1 to No. 2 and so forth.

Further, US 2006/0204674 A1 discloses a liquid-crystalline medium based on a mixture of polar compounds of positive dielectric anisotropy; US 2008/0142758 A1 discloses bimesogenic compounds and their use in liquid crystalline media and liquid crystal devices; US 2011/0309301 A1 and US 2007/0228329 A1 disclose liquid crystal compositions having a nematic phase comprising three components.

## Citation List

### Patent Literature

Patent literature No. 1: WO 1996-11897 A1
Patent literature No. 2: JP 2001-139511 A

## Summary of Invention

### Technical Problem

One of aims of the invention is to provide a liquid crystal composition satisfying at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light, a high stability to heat or a large elastic constant. Another aim is to provide a liquid crystal composition having a suitable balance regarding at least two of the characteristics. Another aim is to provide a liquid crystal display device including such a composition. Another aim is to provide an AM device having characteristics such as a short response time, a large voltage holding ratio, a low threshold voltage, a large contrast ratio and a long service life.

### Solution to Problem

The invention concerns a liquid crystal composition that has a nematic phase and contains at least one compound selected from the group of compounds represented by formula (1) as a first component and at least one compound selected from the group of compounds represented by formula (2) as a second component, and concerns a liquid crystal display device including the composition:

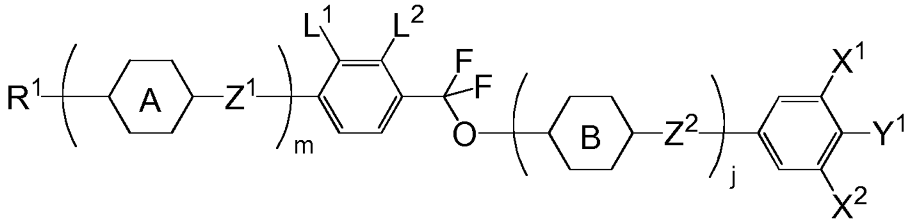

(1)

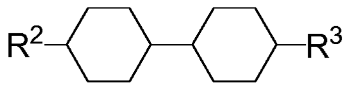 (2)

wherein, in formula (1) or formula (2), $R^1$ or $R^2$ is independently alkyl having 1 to 12 carbons, alkoxy having 1 to 12 carbons or alkenyl having 2 to 12 carbons; $R^3$ is alkenyl having 2 to 12 carbons, or alkenyl having 2 to 12 carbons in which at least one of hydrogen is replaced by fluorine; ring A or ring B is independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ or $Z^2$ is independently a single bond, ethylene, vinylene, methyleneoxy, carbonyloxy or difluoromethyleneoxy; $L^1$ or $L^2$ is independently fluorine or chlorine; $X^1$ or $X^2$ is independently hydrogen or fluorine; $Y^1$ is fluorine, chlorine, alkyl having 1 to 12 carbons in which at least one of hydrogen is replaced by halogen or alkoxy having 1 to 12 carbons in which at least one of hydrogen is replaced by halogen; and m or j is independently 0, 1, 2 or 3, and a sum of m and j is 3 or less.

**Advantageous Effects of Invention**

An advantage of the invention is a liquid crystal composition satisfying at least one of characteristics such as a high maximum temperature of a nematic phase, a low minimum temperature of the nematic phase, a small viscosity, a large optical anisotropy, a large dielectric anisotropy, a large specific resistance, a high stability to ultraviolet light and a high stability to heat or a large elastic constant. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, a low threshold voltage, a large contrast ratio and a long service life.

**Description of Embodiments**

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1,4-cyclohexylene and 1,4-phenylene, and rod like molecular structure. "Polymerizable compound" is added for the purpose of forming a polymer in the composition.

The liquid crystal composition is prepared by mixing a plurality of liquid crystal compounds. A ratio (content) of the liquid crystal compounds is expressed in terms of weight percent (% by weight) based on the weight of the liquid crystal composition. An additive such as an optically active compound, an antioxidant, an ultraviolet light absorber, a dye, an antifoaming agent, the polymerizable compound, a polymerization initiator or a polymerization inhibitor is added to the liquid crystal composition when necessary. A ratio (content) of the additive is expressed in terms of weight percent (% by weight) based on the weight of the liquid crystal composition in a manner similar to the ratio of the liquid crystal compound. Weight parts per million (ppm) may be occasionally used. A ratio of the polymerization initiator and the polymerization inhibitor is exceptionally expressed based on the weight of the polymerizable compound.

"Maximum temperature of the nematic phase" may be occasionally abbreviated as "maximum temperature." "Minimum temperature of the nematic phase" may be occasionally abbreviated as "minimum temperature." An expression "having a large specific resistance" means that the composition has a large specific resistance at room temperature and also at a temperature close to the maximum temperature of the nematic phase in an initial stage, and the composition has a large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and the device has a large voltage holding ratio at room temperature and also at a temperature close to the maximum temperature of the nematic phase even after the device has been used for the long period of time.

An expression "at least one of 'A' may be replaced by 'B' " means that the number of 'A' is arbitrary. A position of 'A' is arbitrary when the number of 'A' is 1, and also positions thereof can be selected without restriction when the number of 'A' is two or more. A same rule also applies to an expression "at least one of 'A' is replaced by 'B'."

A symbol of terminal group $R^1$ is used for a plurality of compounds in chemical formulas of component compounds. In the compounds, two groups represented by two of arbitrary $R^1$ may be identical or different. In one case, for example, $R^1$ of compound (1) is ethyl and $R^1$ of compound (1-1) is ethyl. In another case, for example, $R^1$ of compound

(1) is ethyl and $R^1$ of compound (1-1) is propyl. A same rule also applies to symbols such as $R^4$, $X^1$ or $Y^1$. In formula (1), when m is 2, two of ring A exists. In the compound, two rings represented by two of ring A may be identical or different. A same rule applies to two of arbitrary ring A when n is larger than 2. A same rule also applies to $Z^1$, ring B or the like.

Then, 2-fluoro-1,4-phenylene means two divalent groups described below. In the chemical formula, fluorine may be leftward (L) or rightward (R). A same rule also applies to a divalent group in an asymmetrical ring such as tetrahydropyran-2,5-diyl:

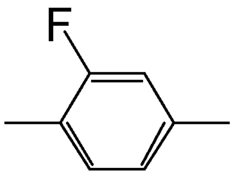

(L)

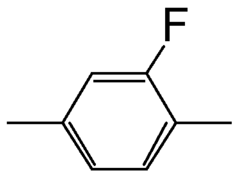

(R)

The invention includes the items described below.

Item 1. A liquid crystal composition that has a nematic phase and contains at least one compound selected from the group of compounds represented by formula (1) as a first component, and at least one compound selected from the group of compounds represented by formula (2) as a second component:

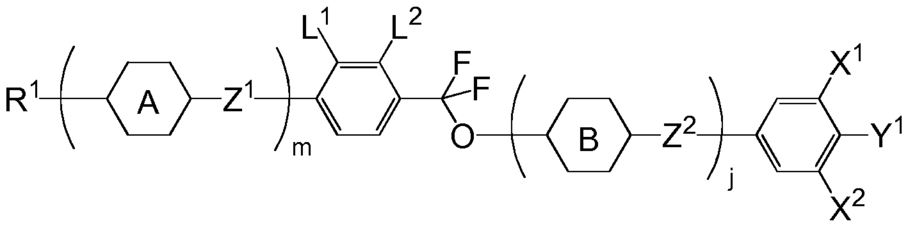

(1)

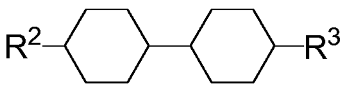

(2)

wherein, in formula (1) and formula (2), $R^1$ or $R^2$ is independently alkyl having 1 to 12 carbons, alkoxy having 1 to 12 carbons or alkenyl having 2 to 12 carbons; $R^3$ is alkenyl having 2 to 12 carbons, or alkenyl having 2 to 12 carbons in which at least one of hydrogen is replaced by fluorine; ring A or ring B is independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ or $Z^2$ is independently a single bond, ethylene, vinylene, methyleneoxy, carbonyloxy or difluoromethyleneoxy; $L^1$ or $L^2$ is independently fluorine or chlorine; $X^1$ or $X^2$ is independently hydrogen or fluorine; $Y^1$ is fluorine, chlorine, alkyl having 1 to 12 carbons in which at least one of hydrogen is replaced by halogen or alkoxy having 1 to 12 carbons in which at least one of hydrogen is replaced by halogen; and m or j is independently 0, 1, 2 or 3, and a sum of m and j is 3 or less.

Item 2. The liquid crystal composition according to item 1, containing at least one compound selected from the group of compounds represented by formula (1-1) to formula (1-14) as the first component:

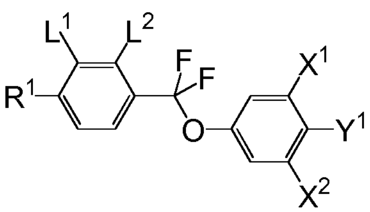

(1-1)

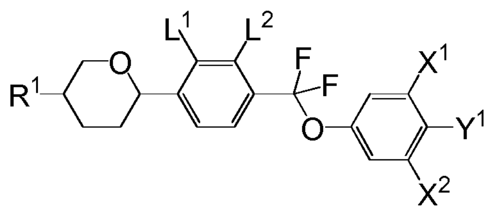
(1-2)

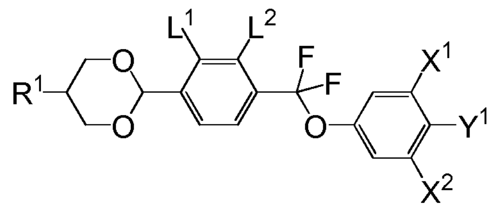
(1-3)

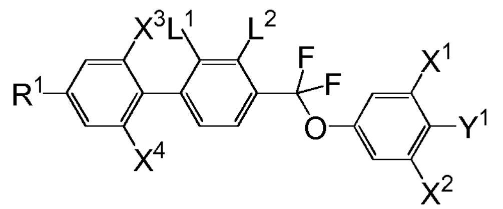
(1-4)

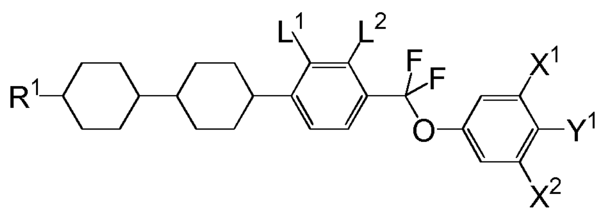
(1-5)

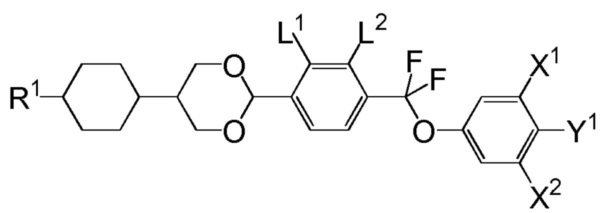
(1-6)

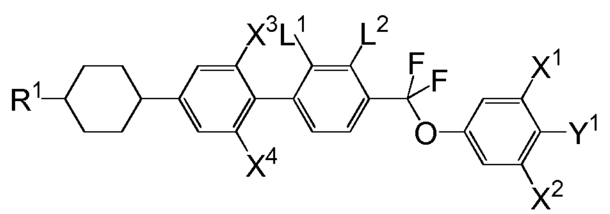
(1-7)

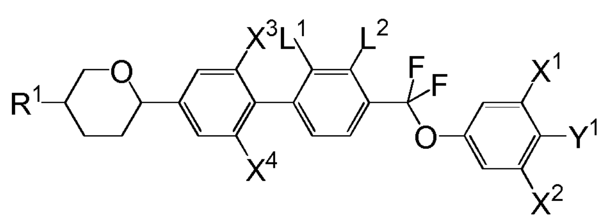
(1-8)

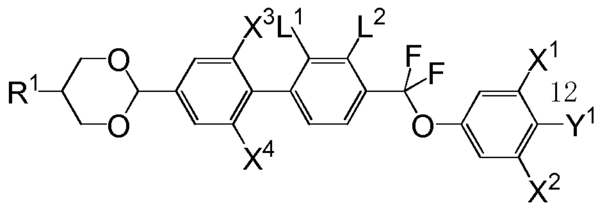

(1-9)

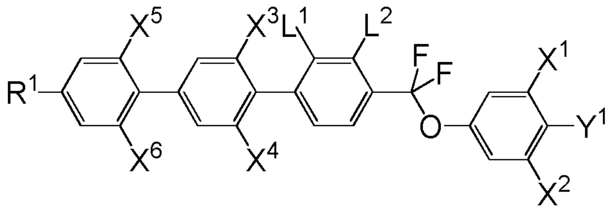

(1-10)

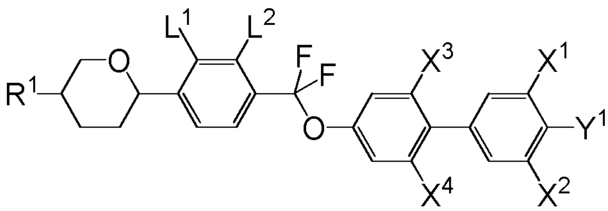

(1-11)

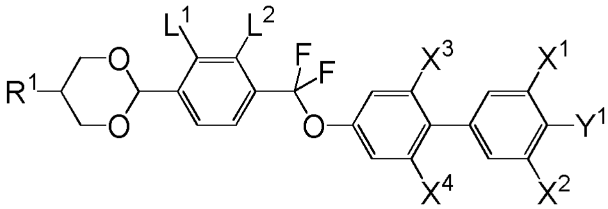

(1-12)

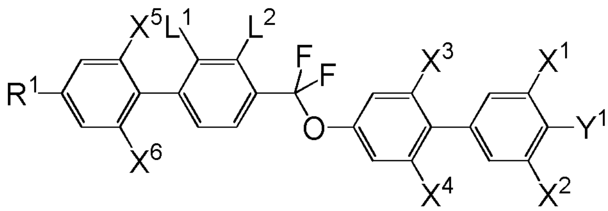

(1-13)

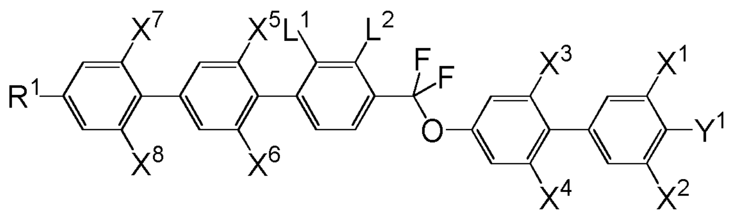

(1-14)

wherein, in formula (1-1) to formula (1-14), $R^1$ is alkyl having 1 to 12 carbons, alkoxy having 1 to 12 carbons, or alkenyl having 2 to 12 carbons; $L^1$ or $L^2$ is independently fluorine or chlorine; $X^1$, $X^2$, $X^3$, $X^4$, $X^5$, $X^6$, $X^7$ or $X^8$ is independently hydrogen or fluorine; and $Y^1$ is fluorine, chlorine, alkyl having 1 to 12 carbons in which at least one of hydrogen is replaced by halogen or alkoxy having 1 to 12 carbons in which at least one of hydrogen is replaced by halogen.

Item 3. The liquid crystal composition according to item 1 or 2, wherein a ratio of the first component is in the range of 5% by weight to 40% by weight, and a ratio of the second component is in the range of 15% by weight to 60% by weight, based on the weight of the liquid crystal composition.

Item 4. The liquid crystal composition according to any one of items 1 to 3, containing at least one compound selected from the group of compounds represented by formula (3) as a third component:

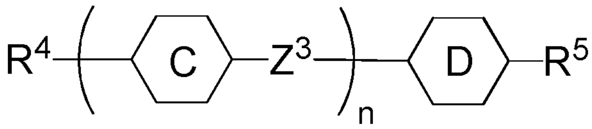

(3)

wherein, in formula (3), $R^4$ or $R^5$ is independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring C or ring D is independently 1,4-cyclohexylene, 1,4-phenylene, 2-fluoro-1,4-phenylene or 2,5-difluoro-1,4-phenylene; $Z^3$ is a single bond, ethylene or carbonyloxy, and n is 1, 2 or 3; and, however, when n is 1, ring C is 1,4-phenylene.

Item 5. The liquid crystal composition according to any one of items 1 to 4, containing at least one compound selected from the group of compounds represented by formula (3-1) to formula (3-12) as the third component:

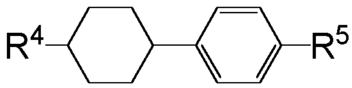

(3-1)

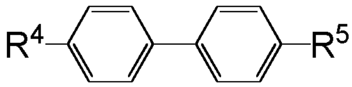

(3-2)

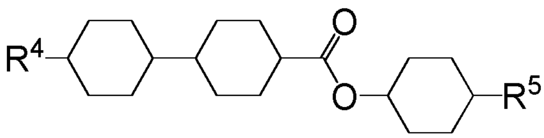

(3-3)

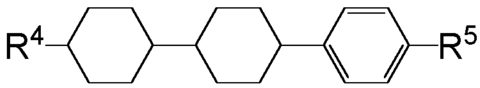

(3-4)

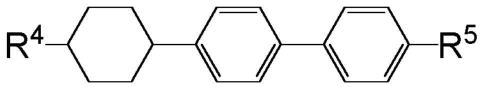

(3-5)

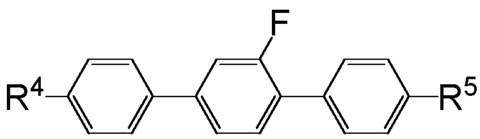

(3-6)

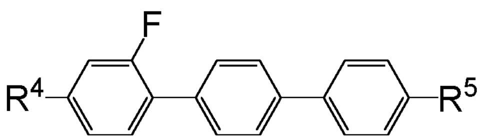

(3-7)

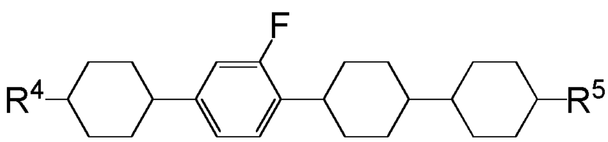

(3-8)

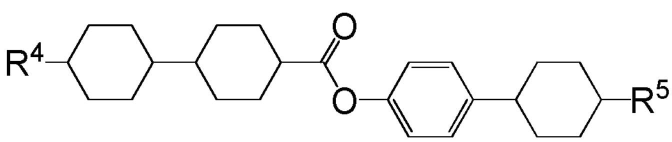

(3-9)

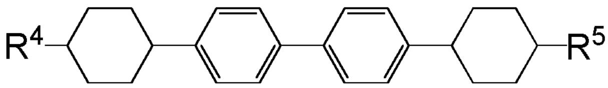

(3-10)

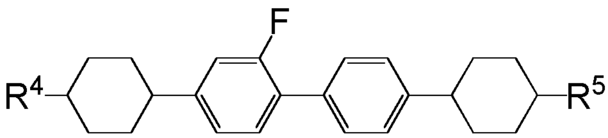

(3-11)

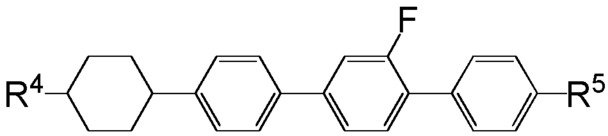

(3-12)

wherein, in formula (3-1) to formula (3-12), $R^4$ or $R^5$ is independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

Item 6. The liquid crystal composition according to item 4 or 5, wherein a ratio of the third component is in the range of 5% by weight to 35% by weight based on the weight of the liquid crystal composition.

Item 7. The liquid crystal composition according to any one of items 1 to 6, containing at least one compound selected from the group of compounds represented by formula (4) as a fourth component:

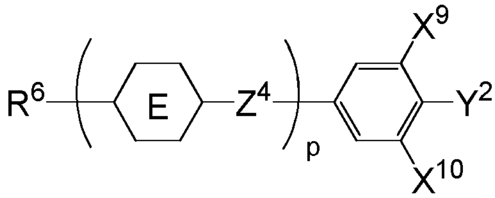

(4)

wherein, in formula (4), $R^6$ is alkyl having 1 to 12 carbons, alkoxy having 1 to 12 carbons, or alkenyl having 2 to 12 carbons; ring E is 1,4-cyclohexylene, 1,4-phenylene, 2-fluoro-1,4-phenylene, 2,6-difluoro-1,4-phenylene, pyrimidine-2,5-diyl, 1,3-dioxane-2,5-diyl or tetrahydropyran-2,5-diyl; $Z^4$ is a single bond, ethylene, carbonyloxy or difluoromethyleneoxy; $X^9$ or $X^{10}$ is independently hydrogen or fluorine; $Y^2$ is fluorine, chlorine, alkyl having 1 to 12 carbons in which at least one of hydrogen is replaced by halogen or alkoxy having 1 to 12 carbons in which at least one of hydrogen is replaced by halogen; and p is 1, 2, 3 or 4.

Item 8. The liquid crystal composition according to any one of items 1 to 7, containing at least one compound selected from the group of compounds represented by formula (4-1) to formula (4-27) as the fourth component:

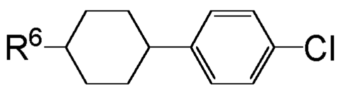

(4-1)

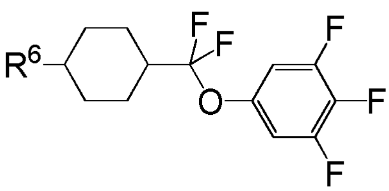

(4-2)

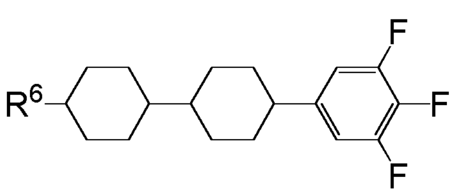

(4-3)

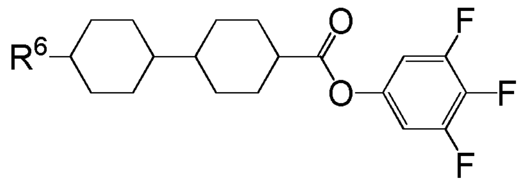

(4-4)

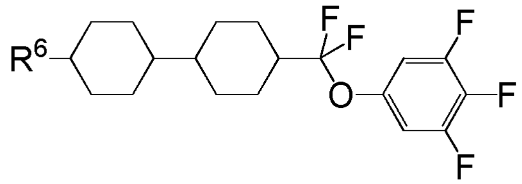

(4-5)

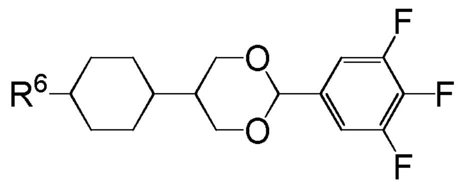

(4-6)

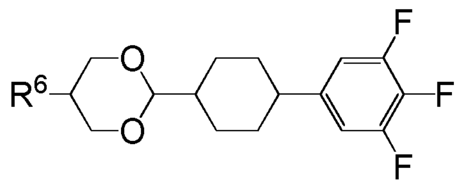

(4-7)

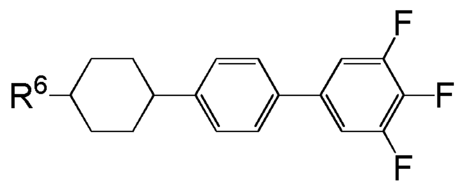

(4-8)

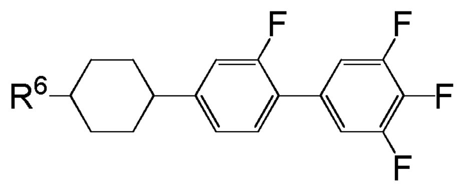

(4-9)

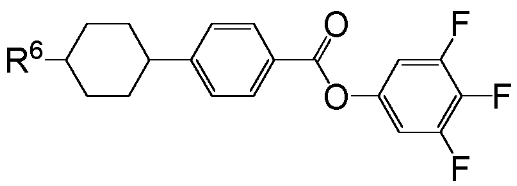

(4-10)

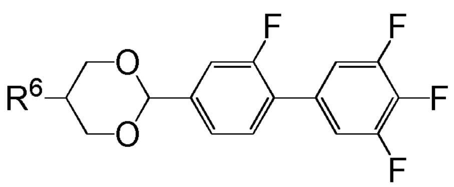

(4-11)

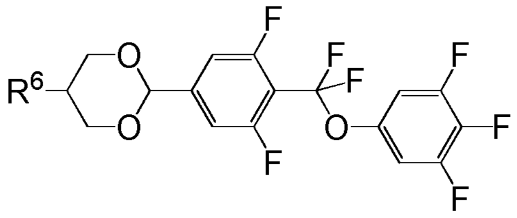

(4-12)

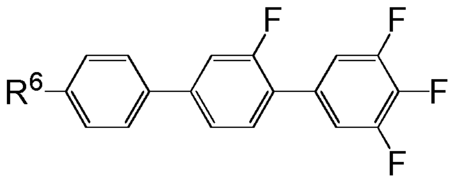

(4-13)

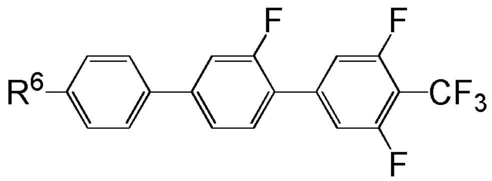

(4-14)

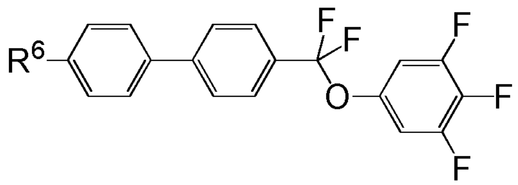

(4-15)

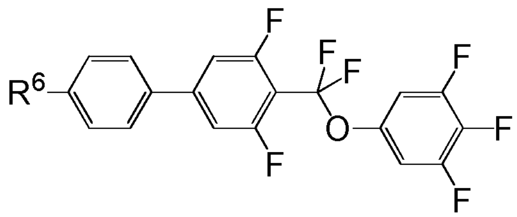

(4-16)

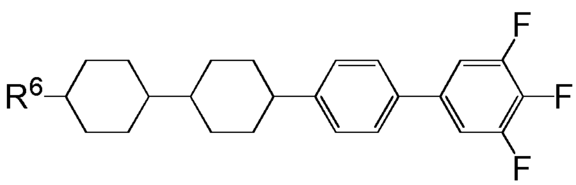

(4-17)

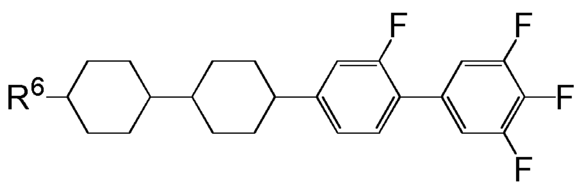

(4-18)

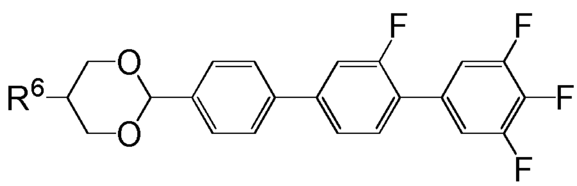

(4-19)

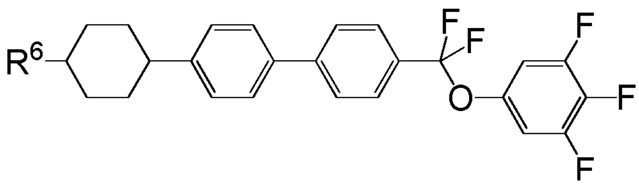

(4-20)

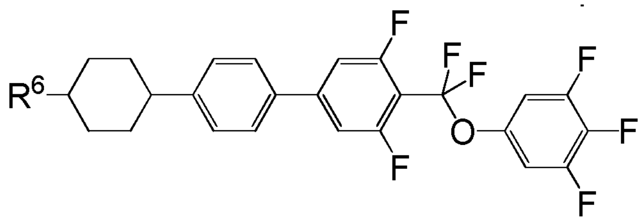

(4-21)

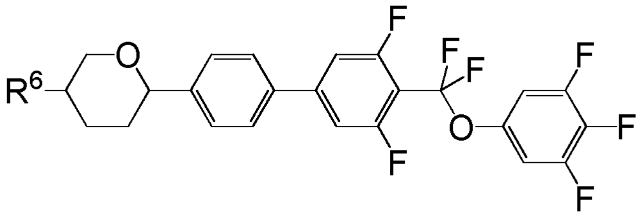

(4-22)

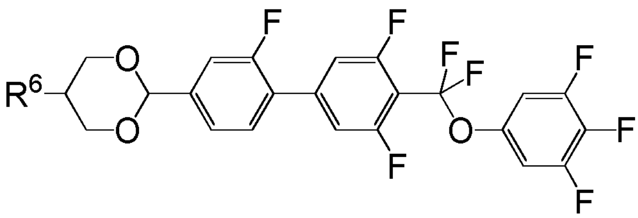

(4-23)

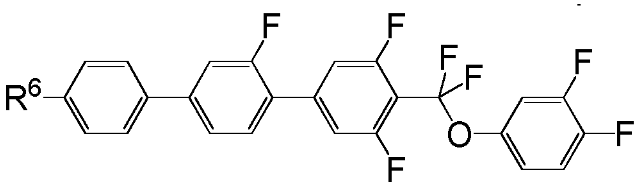

(4-24)

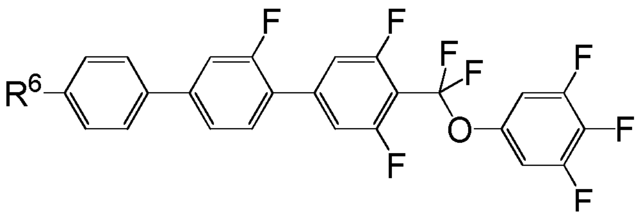

(4-25)

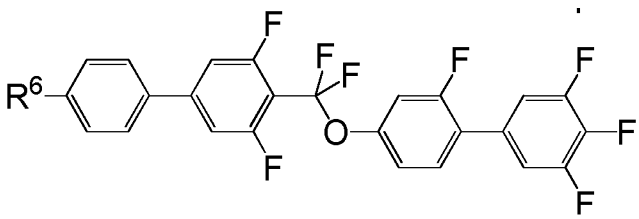

(4-26)

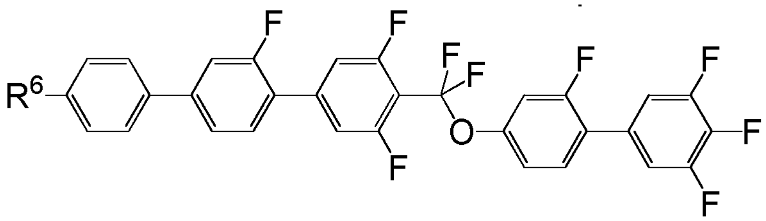

(4-27)

wherein, in formula (4-1) to formula (4-27), $R^6$ is alkyl having 1 to 12 carbons, alkoxy having 1 to 12 carbons or alkenyl having 2 to 12 carbons.

Item 9. The liquid crystal composition according to item 7 or 8, wherein a ratio of the fourth component is in the range of 10% by weight to 60% by weight based on the weight of the liquid crystal composition.

Item 10. The liquid crystal composition according to any one of items 1 to 9, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.

Item 11. A liquid crystal display device, including the liquid crystal composition according to any one of items 1 to 10.

Item 12. The liquid crystal display device according to item 11, wherein an operating mode in the liquid crystal display device includes a TN mode, an ECB mode, an OCB mode, an IPS mode, an FFS mode or an FPA mode, and a driving mode in the liquid crystal display device includes an active matrix mode.

Item 13. Use of the liquid crystal composition according to any one of items 1 to 10 in a liquid crystal display device.

The invention further includes the following items: (a) the composition, further containing at least one of additives such as the optically active compound, the antioxidant, the ultraviolet light absorber, the dye, the antifoaming agent, the polymerizable compound, the polymerization initiator or the polymerization inhibitor; (b) an AM device including the composition; (c) the composition, further containing the polymerizable compound, and an AM device having a polymer sustained alignment (PSA) mode including the composition; (d) a polymer sustained alignment (PSA) mode AM device including the composition, in which the polymerizable compound in the composition is polymerized; (e) a device including the composition and having a PC mode, a TN mode, an STN mode, an ECB mode, an OCB mode, an IPS mode, a VA mode, an FFS mode or an FPA mode; (f) a transmissive device including the composition; (g) use of the composition as a composition having the nematic phase; and (h) use of an optically active composition by adding the optically active compound to the composition.

The composition of the invention will be described in the following order. First, a constitution of component compounds in the composition will be described. Second, main characteristics of the component compounds and main effects of the compounds on the composition will be described. Third, a combination of components in the composition, a preferred ratio of the components and the basis thereof will be described. Fourth, a preferred embodiment of the component compounds will be described. Fifth, preferred specific examples of the component compounds will be shown. Sixth, the additive may be mixed with the composition will be described. Seventh, methods for synthesizing the component compounds will be described. Last, an application of the composition will be described.

First, the constitution of component compounds in the composition will be described. The composition of the invention is classified into composition A and composition B. Composition A may further contain any other liquid crystal compound, any other additive or the like in addition to the liquid crystal compound selected from compound (1), compound (2), compound (3) or compound (4). "Any other liquid crystal compound" means a liquid crystal compound different from compound (1), compound (2), compound (3) or compound (4) . Such a compound is mixed with the composition for the purpose of further adjusting the characteristics. The additive is the optically active compound, the antioxidant, the ultraviolet light absorber, the dye, the antifoaming agent, the polymerizable compound, the polymerization initiator, the polymerization inhibitor or the like.

Composition B consists essentially of liquid crystal compounds selected from compound (1), compound (2), compound (3) or compound (4). An expression "essentially" means that the composition may contain the additive, but does not contain any other liquid crystal compound. Composition B has a smaller number of components than composition A has. Composition B is preferred to composition A in view of cost reduction. Composition A is preferred to composition B in view of possibility of further adjusting physical properties by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium" and a symbol S stands for "small" or "low." The symbols L, M and S represent a classification based on a qualitative comparison among the component compounds, and 0 (zero) means "a value is nearly zero."

Table 2. Characteristics of Compounds

| Compounds | (1) | (2) | (3) | (4) |
|---|---|---|---|---|
| Maximum Temperature | S to L | M | S to L | S to L |
| Viscosity | M to L | S | S to M | M to L |
| Optical Anisotropy | M to L | S | M to L | M to L |
| Dielectric Anisotropy | L | 0 | 0 | S to L |
| Specific Resistance | L | L | L | L |

Upon mixing the component compounds with the composition, the main effects of the component compounds on the characteristics of the composition are as described below. Compound (1) increases the dielectric anisotropy. Compound (2) decreases the viscosity. Compound (3) increases the maximum temperature or decreased the minimum temperature. Compound (4) decreases the minimum temperature and increases the dielectric anisotropy.

Third, the combination of components in the composition, the preferred ratio of the components and the basis thereof will be described. The combination of components in the composition includes a combination of the first component and the second component, a combination of the first component and the second component and the third component, a combination of the first component and the second component and the forth component or a combination of the first component and the second component and the third component and the forth component. The preferred combination of components in the composition includes a combination of the first component and the second component and the forth component or a combination of the first component and the second component and the third component and the forth component.

A preferred ratio of the first component is about 5% by weight or more for increasing the dielectric anisotropy, and about 40 % by weight or less for decreasing the minimum temperature or for decreasing the viscosity. A further preferred ratio is in the range of about 10% by weight to about 35% by weight. A particularly preferred ratio is in the range of about 15% by weight to about 30% by weight.

A preferred ratio of the second component is about 15% by weight or more for decreasing the viscosity, and about 60 % by weight or less for increasing the dielectric anisotropy. A further preferred ratio is in the range of about 20% by weight to about 55% by weight. A particularly preferred ratio is in the range of about 25% by weight to about 50% by weight.

A preferred ratio of the third component is about 5% by weight or more for increasing the maximum temperature or decreasing the viscosity, and about 35% by weight or less for increasing the dielectric anisotropy. A further preferred ratio is in the range of about 5% by weight to about 30% by weight based thereon. A particularly preferred ratio is in the range of about 5% by weight to about 25% by weight based thereon.

A preferred ratio of the fourth component is about 10 % by weight or more for increasing the dielectric anisotropy, and about 60 % by weight or less for decreasing the minimum temperature. A further preferred ratio is in the range of about 15% by weight to about 50% by weight. A particularly preferred ratio is in the range of about 20% by weight to about 45% by weight.

Fourth, the preferred embodiment of the component compounds will be described. $R^1$, $R^2$ or $R^6$ is independently alkyl having 1 to 12 carbons, alkoxy having 1 to 12 carbons or alkenyl having 2 to 12 carbons. Preferred $R^1$, $R^2$ or $R^6$ is alkyl having 1 to 12 carbons for increasing stability to ultraviolet light or heat. $R^3$ is alkenyl having 2 to 12 carbons, or alkenyl having 2 to 12 carbons in which at least one of hydrogen is replaced by fluorine. $R^4$ or $R^5$ is independently alkyl having 1 to 12 carbons, alkoxy having 1 to 12 carbons, alkenyl having 2 to 12 carbons, or alkenyl having 2 to 12 carbons in which at least one of hydrogen is replaced by fluorine. Preferred $R^4$ or $R^5$ is alkyl having 1 to 12 carbons for increasing the stability to ultraviolet light or heat, or the like, and alkenyl having 2 to 12 carbons for decreasing the minimum temperature or for decreasing the viscosity.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in alkenyl depends on a position of a double bond. Trans is preferred in alkenyl such as 1-propenyl, 1-butenyl, 1-pentenyl, 1-hexenyl, 3-pentenyl or 3-hexenyl for decreasing the viscosity or the like. Cis is preferred in alkenyl such as 2-butenyl, 2-pentenyl

or 2-hexenyl. In the alkenyl, straight-chain alkenyl is preferred to branched-chain alkenyl.

Preferred examples of alkenyl in which at least one of hydrogen is replaced by fluorine include 2,2-difluorovinyl, 3,3-difluoro-2-propenyl, 4,4-difluoro-3-butenyl, 5,5-difluoro-4-pentenyl or 6,6-difluoro-5-hexenyl. A further preferred example is 2,2-difluorovinyl or 4,4-difluoro-3-butenyl for decreasing the viscosity.

Then, m or j is independently 0, 1, 2 or 3, and a sum of m and j is 3 or less. Preferred m is 1 or 2 for increasing the maximum temperature. Preferred j is 0 for decreasing the minimum temperature. Then, n is 1, 2 or 3. Preferred n is 2 for decreasing the minimum temperature. Then, p is 1, 2, 3 or 4. Preferred p is 2 or 3 for increasing the dielectric anisotropy.

$Z^1$ or $Z^2$ is independently a single bond, ethylene, vinylene, methyleneoxy, carbonyloxy or difluoromethyleneoxy. Preferred $Z^1$ or $Z^2$ is a single bond for decreasing the viscosity. $Z^3$ is a single bond, ethylene or carbonyloxy. Preferred $Z^3$ is a single bond for decreasing the viscosity. $Z^4$ is a single bond, ethylene, carbonyloxy or difluoromethyleneoxy. Preferred $Z^4$ is difluoromethyleneoxy for increasing the dielectric anisotropy.

Ring A or ring B is independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl. Preferred ring A or ring B is 1,4-phenylene or 2-fluoro-1,4-phenylene for increasing an optical anisotropy. Ring C or ring D is independently 1,4-cyclohexylene, 1,4-phenylene, 2-fluoro-1,4-phenylene or 2,5-difluoro-1,4-phenylene, and ring C is 1,4-phenylene when n is 1. Preferred ring C or ring D is 1,4-cyclohexylene for decreasing the viscosity, and 1, 4-phenylene for increasing the optical anisotropy. Ring E is 1,4-cyclohexylene, 1,4-phenylene, 2-fluoro-1,4-phenylene, 2,6-difluoro-1,4-phenylene, pyrimidine-2,5-diyl, 1,3-dioxane-2,5-diyl or tetrahydropyran-2,5-diyl. Preferred ring E is 1,4-phenylene or 2-fluoro-1,4-phenylene for increasing the optical anisotropy. With regard to the configuration of 1,4-cyclohexylene, trans is preferred to cis for increasing the maximum temperature. Tetrahydropyran-2,5-diyl includes:

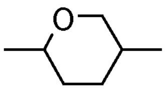
or
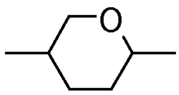
,

preferably

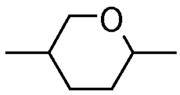
.

$X^1$, $X^2$, $X^3$, $X^4$, $X^5$, $X^6$, $X^7$, $X^8$, $X^9$ or $X^{10}$ is independently hydrogen or fluorine. Preferred $X^1$, $X^2$, $X^3$, $X^4$, $X^5$, $X^6$, $X^7$, $X^8$, $X^9$ or $X^{10}$ is fluorine for increasing the dielectric anisotropy.

$Y^1$ or $Y^2$ is independently fluorine, chlorine, alkyl having 1 to 12 carbons or at least one of hydrogen is replaced by halogen or alkoxy having 1 to 12 carbons in which at least one of hydrogen is replaced by halogen. Preferred $Y^1$ or $Y^2$ is fluorine for decreasing the minimum temperature.

Fifth, the preferred embodiment of the component compounds will be described. Preferred compound (1) includes compound (1-1) to compound (1-14) described above. In the compounds, at least one of the first component preferably includes compound (1-3), compound (1-4), compound (1-7), compound (1-8), compound (1-9), compound (1-10), compound (1-12) or compound (1-13) . At least two of the first component preferably includes a combination of compound (1-3) and compound (1-9), a combination of compound (1-4) and compound (1-7), a combination of compound (1-4) and compound (1-10) or a combination of compound (1-10) and compound (1-13).

Preferred compound (3) includes compound (3-1) to compound (3-12) described above. In the compounds, at least one of the third component preferably includes compound (3-2), compound (3-4), compound (3-5), compound (3-6), compound (3-9) or compound (3-12). At least two of the third components preferably includes a combination of compound (3-2) and compound (3-4), a combination of compound (3-2) and compound (3-5) or a combination of compound (3-2) and compound (3-6).

A preferred compound (4) includes compound (4-1) to compound (4-27) described above. In the compounds, at least one of the fourth component preferably includes compound (4-5), compound (4-11), compound (4-12), compound (4-13), compound (4-15), compound (4-16), compound (4-20), compound (4-23) or compound (4-25). At least two of the fourth components preferably includes a combination of compound (4-12) and compound (4-23), a combination of compound (4-13) and compound (4-16), a combination of compound (4-15) and compound (4-16), a combination of compound (4-16) and compound (4-25), a combination of compound (4-20) and compound (4-25) or a combination of compound (4-23) and compound (4-25).

Sixth, the additive may be mixed with the composition will be described. The additive is the optically active

compound, the antioxidant, the ultraviolet light absorber, the dye, the antifoaming agent, the polymerizable compound, the polymerization initiator, the polymerization inhibitor or the like. The optically active compound is added to the composition for inducing a helical structure in a liquid crystal to give a twist angle. Examples of such a compound include compound (5-1) to compound (5-5). A preferred ratio of the optically active compound is about 5% by weight or less. A further preferred ratio is in the range of about 0.01% by weight to about 2% by weight.

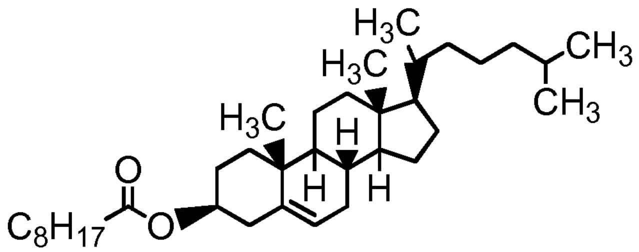

(5-1)

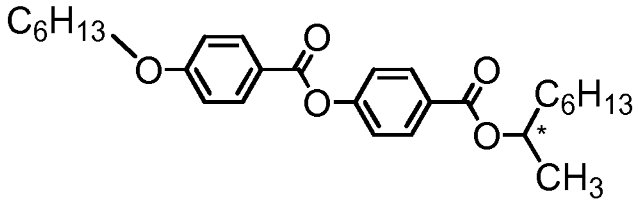

(5-2)

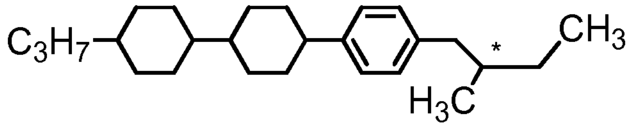

(5-3)

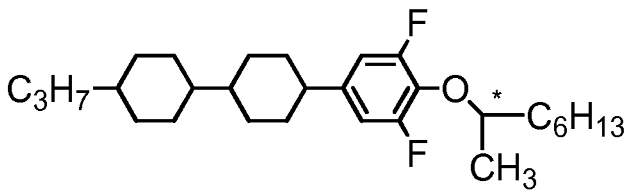

(5-4)

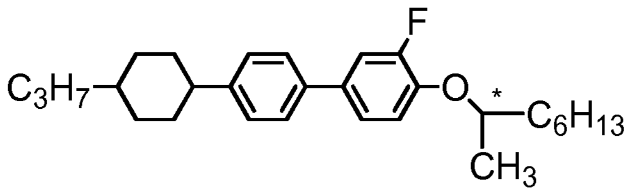

(5-5)

The antioxidant is mixed with the composition for preventing a decrease in the specific resistance caused by heating in air, or for maintaining the large voltage holding ratio at room temperature and also at the temperature close to the maximum temperature of the nematic phase after the device has been used for a long period of time. A preferred example of the antioxidant includes compound (6) where t is an integer 1 to 9.

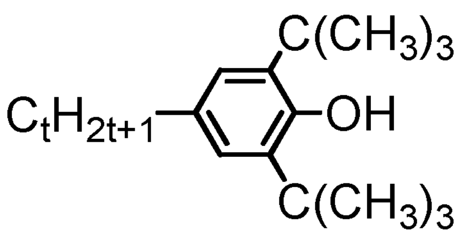

(6)

In compound (6), preferred t is 1, 3, 5, 7 or 9. Further preferred t is 1 or 7. Compound (6) where t is 1 is effective for preventing a decrease in the specific resistance caused by heating in air because the compound (6) has a large volatility. Compound (6) where t is 7 is effective for maintaining the large voltage holding ratio at room temperature and also at the temperature close to the maximum temperature of the nematic phase even after the device has been used for a long period of time because the compound (6) has a small volatility. A preferred ratio of the antioxidant is about 50 ppm or more for achieving an effect thereof, and about 600 ppm or less for avoiding a decrease in the maximum temperature or an increase in the minimum temperature. A further preferred ratio is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred ratio of the absorber or the stabilizer is about 50 ppm or more for achieving the effect thereof, and about 10,000 ppm or less for avoiding the decrease in the maximum temperature or avoiding the increase in the minimum temperature. A further preferred ratio is in the range of about 100 ppm to about 10,000 ppm.

A dichroic dye such as an azo dye or an anthraquinone dye is added to the composition for the purpose of adapting the composition for a device having a guest host (GH) mode. A preferred ratio of the dye is in the range of about 0.01% by weight to about 10% by weight. The antifoaming agent such as dimethyl silicone oil or methyl phenyl silicone oil is added to the composition for preventing foam formation. A preferred ratio of the antifoaming agent is about 1 ppm or more for achieving an effect thereof, and about 1,000 ppm or less for avoiding a poor display. A further preferred ratio is in the range of about 1 ppm to about 500 ppm.

The polymerizable compound is added to the composition for the purpose of adapting the composition to a device having the polymer sustained alignment (PSA) mode. Preferred examples of other polymerizable compounds include a compound having a polymerizable group such as acrylate, methacrylate, a vinyl compound, a vinyloxy compound, propenyl ether, an epoxy compound (oxirane, oxetane) and vinyl ketone. Further preferred examples include an acrylate derivative or a methacrylate derivative. A preferred ratio of the polymerizable compound is about 0.05% by weight or more for achieving an effect thereof, and about 10% by weight or less for preventing a poor display in the device. A further preferred ratio is in the range of about 0.1% by weight to about 2% by weight. The polymerizable compound is polymerized by irradiation with ultraviolet light. The polymerizable compound may be polymerized in the presence of a suitable initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred ratio of the photopolymerization initiator is in the range of about 0.1% by weight to about 5% by weight based on the total weight of the polymerizable compound. A further preferred ratio is in the range of about 1% by weight to about 3% by weight based thereon.

Upon storing the polymerizable compound, the polymerization inhibitor may be added thereto. The polymerizable compound is ordinarily added to the composition without removing the polymerization inhibitor. Examples of the polymerization inhibitor include a hydroquinone derivative such as hydroquinone or methylhydroquinone, 4-tert-butylcatechol, 4-methoxyphenol or phenothiazine.

Seventh, the methods for synthesizing the component compounds will be described. The compounds are synthesized by a known method. Examples of synthetic methods are described. Compound (2) is synthesized by a method described in JP S59-176221 A. Compound (3-12) is synthesized by a method described in JP H2-237949 A. Compound (4-3) and compound (4-8) are synthesized by a method described in JP H2-233626 A. The antioxidant is commercially available. A compound where t in formula (6) is 1 can be obtained from Sigma-Aldrich Corporation. A compounds where t in compound (6) is 7 can be prepared according to a method described in US 3660505 B. As an example of compound (1-4), compound (1-4-1) is synthesized by a method described below.

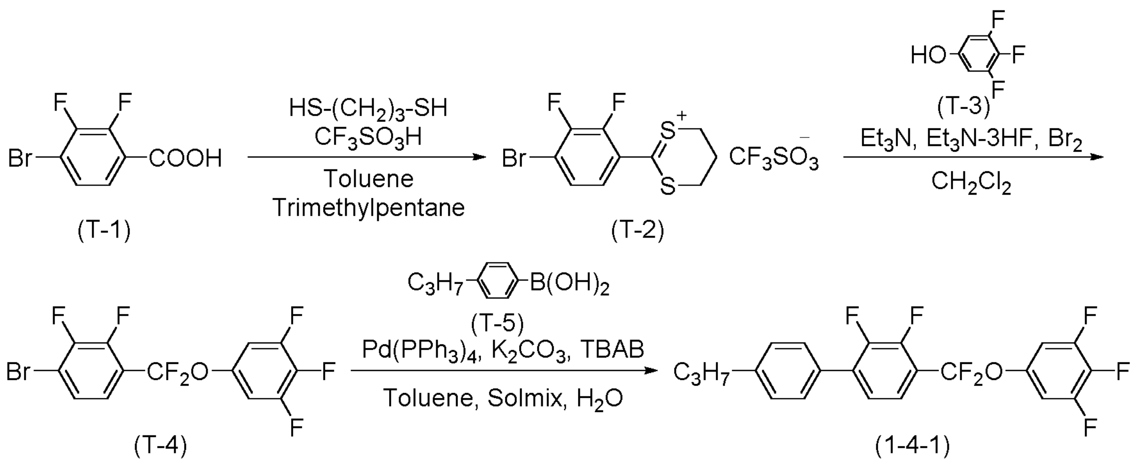


First step

Under a nitrogen atmosphere, in a reaction vessel, compound (T-1) (9.25 g), toluene (20.0 mL) and 2,2,4-trimethylpentane (20.0 mL) were put and the resulting mixture was heated at 60°C. Thereto, propanedithiol (4.31 mL) was added and the resulting mixture was further stirred for 1 hour, and trifluoromethanesulfonic acid (7.63 mL) was added slowly thereto and the resulting mixture was further stirred for 1 hour. Subsequently, the resulting mixture was refluxed under heating for 2 hours while draining distilled-off water. The resulting reaction mixture was cooled to room temperature, and concentrated under reduced pressure, and the resulting residue was purified by recrystallization from t-butyl methyl ether to obtain compound (T-2) (13.9 g; 78%).

Second step

Under a nitrogen atmosphere, in a reaction vessel, compound (T-3) (5.38 g), triethylamine (5.48 mL) and dichloromethane (50.0 mL) were put, and the resulting mixture was cooled to -70 °C. Thereto, dichloromethane solution (200 mL) of compound (T-2) (13.9 g) was slowly added, and the resulting mixture was stirred for 1 hour. Subsequently, a hydrogen fluoride-triethylamine complex (14.8 mL) was added slowly thereto, and the resulting mixture was stirred for 30 minutes. Then, bromine (7.80 mL) was added slowly thereto and the resulting mixture was further stirred for 1 hour. The resulting reaction mixture was poured into iced water, and the resulting solution was neutralized using sodium hydrogencarbonate, and an aqueous layer was subjected to extraction with dichloromethane. The combined organic layers were washed with water and dried over anhydrous magnesium sulfate. The resulting solution was concentrated under reduced pressure, and the resulting residue was purified by column chromatography using heptane as an eluent and a silica gel as a packing material to obtain compound (T-4) (11.0 g; 93%)

Third step

Under a nitrogen atmosphere, in a reaction vessel, compound (T-4) (4.00 g), compound (T-5) (1.86 g), tetrakis(triphenylphosphine)palladium (0.119 g), potassium carbonate (2.84 g), tetrabutylammonium bromide (TBAB) (0.663 g), toluene (40.0 mL), Solmix A-11 (registered tradename; Japan Alcohol Trading Co., Ltd.) (40.0 mL) and water (40.0 mL) were put, and the resulting mixture was refluxed under heating for 5 hours. The resulting reaction mixture was poured into water, and an aqueous layer was subjected to extraction with toluene. The combined organic layers were washed with water and dried over anhydrous magnesium sulfate. The resulting solution was concentrated under reduced pressure, and the resulting residue was purified by column chromatography using heptane as an eluent and a silica gel as a packing material. The resulting residue was further purified by recrystallization from Solmix A-11 (registered tradename; Japan Alcohol Trading Co., Ltd.) to obtain compound (No. 1-4-1) (3.73 g; 85%).
Chemical shift $\delta$ (ppm; $CDCl_3$) : 7.51 - 7.44 (m, 3H), 7.33 - 7.26 (m, 3H), 7.03 - 6.96 (m, 2H), 2.66 (t, J = 7.9 Hz, 2H), 1.75 - 1.64 (m, 2H), 0.98 (t, J = 7.4 Hz, 3H).

Any compounds whose synthetic methods are not described can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to publicly known methods using the thus obtained compounds. For example, the component compounds are mixed and dissolved in each other by heating.

Last, the application of the composition will be described. The composition of the invention mainly has a minimum

temperature of about -10°C or lower, a maximum temperature of about 70°C or higher, and an optical anisotropy in the range of about 0.07 to about 0.20. A device including the composition has a large voltage holding ratio. The composition is suitable for use in an AM device. The composition is particularly suitable for use in a transmissive AM device. A composition having an optical anisotropy in the range of about 0.08 to about 0.25, and also a composition having an optical anisotropy in the range of about 0.10 to about 0.30 may be prepared by controlling a ratio of the component compounds or by mixing with any other liquid crystal compound. The composition can be used as the composition having the nematic phase, and as the optically active composition by adding the optically active compound.

The composition can be used for the AM device. The composition can also be used to a PM device. The composition can also be used for an AM device and a PM device each having a mode such as the PC mode, the TN mode, the STN mode, the ECB mode, the OCB mode, the IPS mode, the FFS mode, the VA mode and the FPA mode. Use for the AM device having the IPS mode or the TN mode, the OCB mode or the FFS mode is particularly preferred. In the AM device having the IPS mode or the FFS mode, alignment of liquid crystal molecules when no voltage is applied may be parallel or vertical to a glass substrate. The device may be of a reflective type, a transmissive type or a transflective type. Use for the transmissive device is preferred. Use for an amorphous silicon-TFT device or a polycrystal silicon-TFT device is allowed. Use for a nematic curvilinear aligned phase (NCAP) device prepared by microencapsulating the composition, or for a polymer dispersed (PD) device in which a three-dimensional network-polymer is formed in the composition is allowed.

## Examples

The invention will be described in greater detail by way of Examples. However, the invention is not limited by the Examples. The invention includes a mixture of a composition in Example 1 and a composition in Example 2. The invention also includes a mixture in which at least two compositions in Examples are mixed. The thus prepared compound was identified by methods such as an NMR analysis. Characteristics of the compound and the composition were measured by methods described below.

NMR analysis: For measurement, DRX-500 made by Bruker BioSpin Corporation was used. In $^1$H-NMR measurement, a sample was dissolved in a deuterated solvent such as $CDCl_3$, and measurement was carried out under conditions of room temperature, 500 MHZ and 16 times of accumulation. Tetramethylsilane (TMS) was used as an internal standard. In $^{19}$F-NMR measurement, $CFCl_3$ was used as an internal standard, and measurement was carried out under conditions of 24 times of accumulation. In explaining nuclear magnetic resonance spectra obtained, s, d, t, q, quin, sex, m and r stand for a singlet, a doublet, a triplet, a quartet, a quintet, a sextet, a multiplet, and br being broad, respectively.

Gas chromatographic analysis: GC-14B Gas Chromatograph made by Shimadzu Corporation was used for measurement. A carrier gas was helium (2 mL per minute). A sample injector and a detector (FID) were set to 280°C and 300°C, respectively. A capillary column DB-1 (length 30 m, bore 0.32 mm, film thickness 0.25 μm; dimethylpolysiloxane as a stationary phase, non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample injector. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 μm) made by Agilent Technologies, Inc., Rtx-1 (length 30 m, bore 0.32 mm, film thickness 0.25 μm) made by Restek Corporation and BP-1 (length 30 m, bore 0.32 mm, film thickness 0.25 μm) made by SGE International Pty. Ltd. A capillary column CBP1-M50-025 (length 50 m, bore 0.25 mm, film thickness 0.25 μm) made by Shimadzu Corporation may also be used for the purpose of avoiding an overlap of peaks of the compounds.

A ratio of liquid crystal compounds contained in the composition may be calculated by the method as described below. The mixture of liquid crystal compounds is detected by gas chromatograph (FID). An area ratio of each peak in the gas chromatogram corresponds to the ratio (weight ratio) of the liquid crystal compound. When the capillary columns described above were used, a correction coefficient of each of the liquid crystal compounds may be regarded as 1 (one) . Accordingly, the ratio (% by weight) of the liquid crystal compound is calculated from the area ratio of each peak.

Sample for measurement: When characteristics of a composition was measured, the composition was used as a sample as was. Upon measuring characteristics of a compound, a sample for measurement was prepared by mixing the compound (15% by weight) with a base liquid crystal (85% by weight) . Values of characteristics of the compound were calculated, according to an extrapolation method, using values obtained by measurement.

(Extrapolated value) = {(measured value of a sample for measurement) - 0.85 × (measured value of a base liquid crystal) } / 0.15. When a smectic phase (or crystals) precipitates at the ratio thereof at 25°C, a ratio of the compound

to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

A base liquid crystal described below was used. A ratio of the component compound was expressed in terms of weight percent (% by weight).

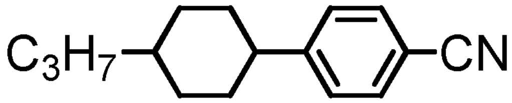 24%

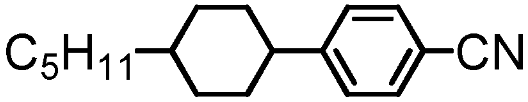 36%

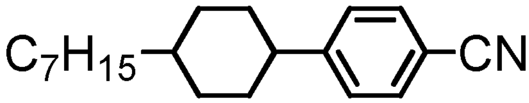 25%

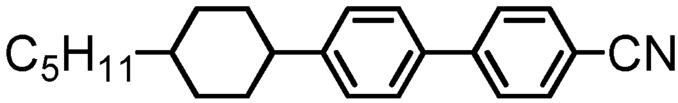 15%

Measuring method: Measurement of characteristics was carried out by the methods described below. Most of the measuring methods are applied as described in the Standard of the Japan Electronics and Information Technology Industries Association (hereinafter abbreviated as JEITA) (JEITA EIAJ ED-2521B) discussed and established by JEITA, or modified thereon. No thin film transistor (TFT) was attached to a TN device used for measurement.

(1) Maximum temperature of nematic phase (NI; °C) : A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."

(2) Minimum temperature of nematic phase (Tc; °C) : Samples each having a nematic phase were put in glass vials and kept in freezers at temperatures of 0°C, -10°C, -20°C, -30°C and -40°C for 10 days, and then liquid crystal phases were observed. For example, when the sample maintained the nematic phase at -20°C and changed to crystals or a smectic phase at -30°C, Tc of the sample was expressed as Tc < -20°C. A minimum temperature of the nematic phase may be occasionally abbreviated as "minimum temperature."

(3) Viscosity (bulk viscosity; $\eta$; measured at 20°C; mPa·s): A cone-plate (E type) rotational viscometer made by Tokyo Keiki, Inc. was used for measurement.

(4) Viscosity (rotational viscosity; $\gamma 1$; measured at 25°C; mPa·s): Measurement was carried out according to the method described in M. Imai et al., Molecular Crystals and Liquid Crystals, Vol. 259, p. 37 (1995). A sample was put in a TN device in which a twist angle is 0 degree and a distance (cell gap) between two glass substrates was 5 micrometers. Voltage was applied stepwise to the device in the range of 16 V to 19.5 V at an increment of 0.5 V. After a period of 0.2 second with no voltage application, voltage was applied repeatedly under the conditions of only one rectangular wave (rectangular pulse; 0.2 second) and no voltage application (2 seconds). A peak current and a peak time of a transient current generated by the applied voltage were measured. A value of rotational viscosity was obtained from the measured values and calculation equation (8) described on page 40 of the paper presented by M. Imai et al. A value of a dielectric anisotropy required for the calculation was determined using the device by which the rotational viscosity was measured and by the method described below.

(5) Optical anisotropy (refractive index anisotropy; $\Delta n$; measured at 25°C) : Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index ($n\parallel$) was measured when a direction of polarized light was parallel to a direction of rubbing. A refractive index ($n\perp$) was measured when the direction of polarized light was perpendicular to the direction of rubbing.

A value of optical anisotropy was calculated from an equation: $\Delta n = n\| - n\perp$.

(6) Dielectric anisotropy ($\Delta\varepsilon$; measured at 25°C) : A sample was put in a TN device in which a distance (cell gap) between two glass substrates was 9 micrometers and a twist angle was 80 degrees. Sine waves (10 V, 1 kHz) were applied to the device, and after 2 seconds, a dielectric constant ($\varepsilon\|$) in a major axis direction of the liquid crystal molecules was measured. Sine waves (0.5 V, 1 kHz) were applied to the device, and after 2 seconds, a dielectric constant ($\varepsilon\perp$) in a minor axis direction of the liquid crystal molecules was measured. A value of dielectric anisotropy was calculated from an equation: $\Delta\varepsilon = \varepsilon\| - \varepsilon\perp$.

(7) Threshold voltage (Vth; measured at 25°C; V) : An LCD-5100 luminance meter made by Otsuka Electronics Co., Ltd. was used for measurement. A light source was a halogen lamp. A sample was put in a normally white mode TN device in which a distance (cell gap) between two glass substrates was $0.45/\Delta n$ ($\mu$m) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of a voltage at 90% transmittance.

(8) Voltage holding ratio (VHR-1; measured at 25°C; %): A TN device used for measurement had a polyimide alignment film, and a distance (cell gap) between two glass substrates was 5 micrometers. A sample was put in the device, and the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.

(9) Voltage holding ratio (VHR-2; measured at 80°C; %): A voltage holding ratio was measured according to procedures identical with the procedures described above except that measurement was carried out at 80°C in place of 25°C. The thus obtained value was expressed in terms of VHR-2.

(10) Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film and a cell gap was 5 micrometers. A sample was injected into the device, and then was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has a large stability to ultraviolet light. A value of VHR-3 is preferably 90% or more, and further preferably, 95% or more.

(11) Voltage holding ratio (VHR-4; measured at 25°C; %): Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has a large stability to heat.

(12) Response time ($\tau$; measured at 25°C; ms) : An LCD-5100 luminance meter made by Otsuka Electronics Co., Ltd. was used for measurement. A light source was a halogen lamp. A low-pass filter was set at 5 kHz. A sample was put in a normally white mode TN device in which a distance (cell gap) between two glass substrates was 5 micrometers and a twist angle was 80 degrees. A voltage (rectangular waves; 60 Hz, 5 V, 0.5 second) was applied to the device. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A rise time ($\tau r$; millisecond) was expressed in terms of time required for a change from 90% transmittance to 10% transmittance. A fall time ($\tau f$; millisecond) was expressed in terms of time required for a change from 10% transmittance to 90% transmittance. A response time was represented by a sum of the rise time and the fall time thus obtained.

(13) Elastic constant (K; measured at 25°C; pN): HP4284A LCR Meter made by Yokogawa-Hewlett-Packard Co. was used for measurement. A sample was put in a horizontal alignment device in which a distance (cell gap) between two glass substrates was 20 micrometers. An electric charge of 0 V to 20 V was applied to the device, and electrostatic capacity and applied voltage were measured. Measured values of electrostatic capacity (C) and applied voltage (V) were fitted to equation (2.98) and equation (2.101) on page 75 of "Liquid Crystal Device Handbook" (Ekisho Debaisu Handobukku in Japanese; The Nikkan Kogyo Shimbun, Ltd.) and values of $K^{11}$ and $K^{33}$ were obtained from equation (2.99). Next, $K^{22}$ was calculated using the previously determined values of $K^{11}$ and $K^{33}$ in formula (3.18) on page 171. Elastic constant K was expressed in terms of a mean value of the thus determined $K^{11}$, $K^{22}$ and $K^{33}$.

(14) Specific resistance ($\rho$; measured at 25 C; $\Omega$cm): Into a vessel equipped with electrodes, 1.0 milliliter of sample was injected. A direct current voltage (10V) was applied to the vessel, and a direct current after 10 seconds was measured. Specific resistance was calculated from the following equation:

(specific resistance) = {(voltage) × (electric capacity of the vessel)} / {(direct current) × (dielectric constant of vacuum)}.

(15) Helical pitch (P; measured at room temperature; μm): A helical pitch was measured according to a wedge method. Refer to page 196 in "Handbook of Liquid Crystals (Ekisho Binran in Japanese)" (issued in 2000, Maruzen Co., Ltd.). A sample was injected into a wedge cell and left to stand at room temperature for 2 hours, and then a gap (d2 - d1) between disclination lines was observed by a polarizing microscope (trade name: MM40/60 Series, Nikon Corporation) . A helical pitch (P) was calculated according to the following equation in which an angle of the wedge cell was expressed as θ:

$$P = 2 \times (d2 - d1) \times \tan\theta.$$

(16) Dielectric constant in a minor axis direction (epsilon⊥; measured at 25°C) : A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) in a minor axis direction of the liquid crystal molecules was measured.

The compounds described in Examples were described using symbols according to definitions in Table 3 below. In Table 3, a configuration of 1,4-cyclohexylene is trans. A parenthesized number next to a symbolized compound in Examples corresponds to the number of the compound. A symbol (-) means any other liquid crystal compound. A ratio (percentage) of the liquid crystal compound is expressed in terms of weight percent (% by weight) based on the weight of the liquid crystal composition. Values of characteristics of the composition were summarized in a last part.

Table 3 Method for Description of Compounds using Symbols R-($A_1$)-$Z_1$-·····-$Z_n$-($A_n$)-R'

| 1) Left-terrninal Group R- | Symbol |
|---|---|
| $C_nH_{2n+1}$- | n- |
| $C_nH_{2n+1}O$- | nO- |
| $C_mH_{2m+1}OC_nH_{2n}$- | mOn- |
| $CH_2$=CH- | V- |
| $C_nH_{2n+1}$-CH=CH- | nV- |
| $CH_2$=CH-$C_nH_{2n}$- | Vn- |
| $C_mH_{2m+1}$-CH=CH-$C_nH_{2n}$- | mVn- |
| $CF_2$=CH- | VFF- |
| $CF_2$=CH-$C_nH_{2n}$- | VFFn- |

| 2) Right-terminal Group -F | Symbol |
|---|---|
| -$C_nH_{2n+1}$ | -n |
| -$OC_nH_{2n+1}$ | -On |
| -CH=$CH_2$ | -V |
| -CH=CH-$C_nH_{2n+1}$ | -Vn |
| -$C_nH_{2n}$-CH=$CH_2$ | -nV |
| -$C_nH_{2n}$-CH=CH-$C_mH_{2m+1}$ | -nVm |
| -CH=$CF_2$ | -VFF |
| -$COOCH_3$ | -EMe |
| -F | -F |

| 4) Ring Structure -An- | Symbol |
|---|---|
| 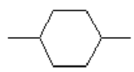 | H |
| 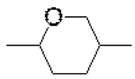 | Dh |
| 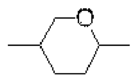 | dh |
| 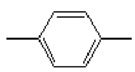 | B |
| 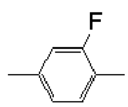 | B(F) |
| 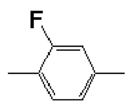 | B(2F) |
| 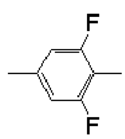 | B(F,F) |

(continued)

| 1) Left-terrninal Group R- | Symbol | 4) Ring Structure -An- | Symbol |
|---|---|---|---|
| -Cl | -CL | 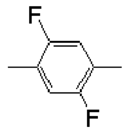 | B(2F,5F) |
| $-OCF_3$ | $-OCF_3$ | | |
| $-CF_3$ | $-CF_3$ | | |
| -CN | -C | 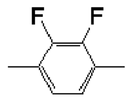 | B(2F,3F) |
| $-CF=CH-CF_3$ | -FVCF3 | | |
| 3) Bonding Group -Zn- | Symbol | | |
| $-C_2H_4-$ | 2 | 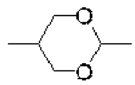 | G |
| -COO- | E | | |
| -CH=CH- | V | | |
| -C≡C- | T | 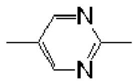 | Py |
| $-CF_2O-$ | X | | |
| $-OCF_2-$ | x | | |
| $-CH_2O-$ | 1O | | |
| 5) Examples of Description | | | |
| Example 1 | 3-HH-V1 | Example 2 | 3-BB(F)B(F,F)-F |
| 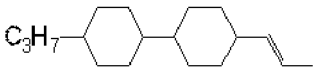 | | 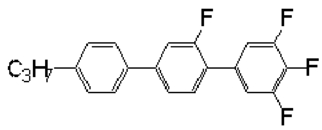 | |
| Examples 3 | 4-BB(F)B(F,F)XB(F)-OCF3 | Example 4 | 5-GB(2F,3F)XB(F,F)-F |
| 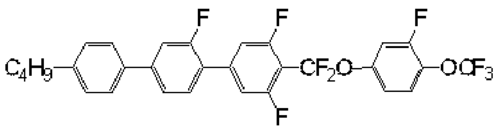 | | 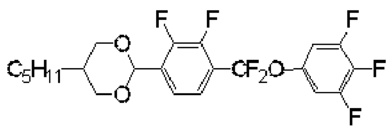 | |

**Comparative Example 1**

Example 39 was selected from the compositions disclosed in WO 1996-11897 A1. The reason was that the composition contains compound (4) and η of thereof is the smallest. Components and characteristics of the composition are as described below.

| | | |
|---|---|---|
| 3-HBXB(F,F)-F | (4) | 3% |
| 5-HBXB(F,F)-F | (4) | 8% |
| 3-HBXB-OCF3 | (4) | 5% |
| 2-HBB(F)-F | (4) | 8% |
| 3-HBB(F)-F | (4) | 8% |
| 5-HBB(F)-F | (4) | 16% |
| 5-HB-F | (4) | 6% |
| 7-HB-F | (4) | 6% |
| 5-HHB-OCF3 | (4) | 8% |
| 3-H2HB-OCF3 | (4) | 8% |
| 5-H2HB-OCF3 | (4) | 8% |
| 3-HH2B-OCF3 | (4) | 8% |

(continued)

| | | |
|---|---|---|
| 5-HH2B-OCF3 | (4) | 8% |
| NI = 84.9°C; $\Delta n$ = 0.101; $\Delta\varepsilon$ = 5.5; $V_{th}$ = 2.12 V; $\eta$ = 16.6 mPa · s. | | |

**Comparative Example 2**

Example 18 was selected from the compositions disclosed in JP 2001-139511 A. The reason was that the composition contains compound (3-1), compound (3-4) and compound (4) and $\eta$ of thereof is the smallest. Components and characteristics of the composition are as described below.

| | | |
|---|---|---|
| 3-HBxB(2F,3F)-O2 | (-) | 5% |
| 5-HBxB(2F,3F)-O2 | (-) | 5% |
| 7-HB(F)-F | (4) | 5% |
| 5-H2B(F)-F | (4) | 5% |
| 3-HB-O2 | (3-1) | 10% |
| 3-HH-4 | (-) | 5% |
| 2-HHB(F)-F | (4) | 10% |
| 3-HHB(F)-F | (4) | 10% |
| 3-H2HB(F)-F | (4) | 5% |
| 2-HBB(F)-F | (4) | 3% |
| 3-HBB(F)-F | (4) | 3% |
| 5-HBB(F)-F | (4) | 6% |
| 2-H2BB(F)-F | (4) | 5% |
| 3-H2BB(F)-F | (4) | 6% |
| 3-HHB-1 | (3-4) | 8% |
| 3-HHB-O1 | (3-4) | 5% |
| 3-HHB-3 | (3-4) | 4% |
| NI = 89.2°C; $\Delta n$ = 0.099; $\Delta\varepsilon$ = 2.2; $V_{th}$ = 3.05 V; $\eta$ = 20.2 mPa · s. | | |

**Example 1**

| | | |
|---|---|---|
| 3-BB(2F,3F)XB(F,F)-F | (1-4) | 19% |
| 3-HH-V | (2) | 32% |
| 3-HH-V1 | (2) | 5% |
| V-HHB-1 | (3-4) | 13% |
| 1-BB(F)B-2V | (3-6) | 2% |
| 2-HHBB(F,F)-F | (4-17) | 3% |
| 3-HHBB(F,F)-F | (4-17) | 3% |
| 3-HBBXB(F,F)-F | (4-20) | 8% |
| 3-BB(F)B(F,F)XB(F,F)-F | (4-25) | 2% |

(continued)

| | | |
|---|---|---|
| 4-BB(F)B(F,F)XB(F,F)-F | (4-25) | 7% |
| 5-BB(F)B(F,F)XB(F,F)-F | (4-25) | 6% |
| NI = 86.3°C; $T_c$ < -20°C; $\Delta n$ = 0.116; $\Delta\varepsilon$ = 7.6; $V_{th}$ = 1.56 V; $\eta$ = 10.0 mPa·s; $\gamma 1$ = 80.1 mPa·s; $\varepsilon\perp / \Delta\varepsilon$ = 0.47. | | |

**Example 2**

| | | |
|---|---|---|
| 5-HB(2F,3F)B(2F,3F)XB(F,F)-F | (1) | 6% |
| 3-GB(2F,3F)XB(F,F)-F | (1-3) | 7% |
| 3-BB(2F,3F)XB(F,F)-F | (1-4) | 8% |
| 4-HH-V | (2) | 20% |
| 4-HH-V1 | (2) | 12% |
| 7-HB-1 | (3-1) | 3% |
| 3-HHEH-3 | (3-3) | 3% |
| 3-HHEH-5 | (3-3) | 4% |
| 3-HBB-2 | (3-5) | 3% |
| 5-B(F)BB-2 | (3-7) | 5% |
| 5-B(F)BB-3 | (3-7) | 3% |
| 3-HHXB(F,F)-CF3 | (4) | 6% |
| 3-HB-CL | (4-1) | 3% |
| 3-HBB(F,F)-F | (4-8) | 3% |
| 3-GB(F,F)XB(F,F)-F | (4-12) | 5% |
| 3-HBB(F,F)XB(F,F)-F | (4-21) | 3% |
| 3-BB(F,F)XB(F)B(F,F)-F | (4-26) | 3% |
| 5-BB(F)B(F,F)XB(F)B(F,F)-F | (4-27) | 3% |
| NI = 71.4°C; $T_c$ < -20°C; $\Delta n$ = 0.105; $\Delta\varepsilon$ = 7.0; Vth = 1.65 V; $\eta$ = 13.9 mPa·s; $\gamma 1$ = 83.7 mPa·s; $\varepsilon\perp / \Delta\varepsilon$ = 0.51. | | |

**Example 3**

| | | |
|---|---|---|
| 3-BB(2F,3F)XB(F)-F | (1-4) | 5% |
| 3-HBB(2F,3F)XB(F,F)-F | (1-7) | 5% |
| 3-dhBB(2F,3F)XB(F,F)-F | (1-8) | 5% |
| 3-HH-V | (2) | 10% |
| 3-HH-V1 | (2) | 5% |
| 3-HH-VFF | (2) | 22% |
| V2-BB-1 | (3-2) | 5% |
| 3-HB(F)HH-2 | (3-8) | 4% |

(continued)

| | | |
|---|---|---|
| 5-HBB(F)B-2 | (3-12) | 4% |
| 5-HXB(F,F)-F | (4-2) | 4% |
| 3-HHXB(F,F)-F | (4-5) | 6% |
| 3-BBXB(F,F)-F | (4-15) | 3% |
| 3-BB(F,F)XB(F,F)-F | (4-16) | 3% |
| 3-dhBB(F,F)XB(F,F)-F | (4-22) | 5% |
| 3-GB(F)B(F,F)XB(F,F)-F | (4-23) | 5% |
| 5-GB(F)B(F,F)XB(F,F)-F | (4-23) | 4% |
| 1O1-HBBH-5 | (-) | 5% |
| NI = 86.2°C; $T_c$ < -20°C; $\Delta n$ = 0.112; $\Delta\varepsilon$ = 7.8; $V_{th}$ = 1.53V; $\eta$ = 11.1 mPa·s; $\gamma 1$ = 81.1 mPa·s; $\varepsilon\perp / \Delta\varepsilon$ = 0.46. | | |

**Example 4**

| | | |
|---|---|---|
| 3-BB(2F,3F)XB(F,F)-F | (1-4) | 10% |
| 3-GBB(2F,3F)XB(F,F)-F | (1-9) | 6% |
| 3-GBB(2F,3F)XB(F)-F | (1-9) | 5% |
| 1V2-HH-1 | (2) | 10% |
| 1V2-HH-3 | (2) | 12% |
| 3-HH-V | (2) | 19% |
| 3-BB(2F,5F)B-3 | (3) | 3% |
| 3-HHEBH-3 | (3-9) | 5% |
| 3-HHEBH-5 | (3-9) | 5% |
| 3-HHB(F,F)-F | (4-3) | 6% |
| 3-HGB(F,F)-F | (4-6) | 3% |
| V-HB(F)B(F,F)-F | (4-9) | 5% |
| 3-BB(F)B(F,F)-F | (4-13) | 3% |
| 3-BB(F)B(F,F)XB(F)-F | (4-24) | 3% |
| 4-BB(F)B(F,F)XB(F)-F | (4-24) | 5% |
| NI = 93.9°C; $T_c$ < -20°C; $\Delta n$ = 0.110; $\Delta\varepsilon$ = 5.7; $V_{th}$ = 1.81 V; $\eta$ = 13.4 mPa·s; $\gamma 1$ = 83.0 mPa·s; $\varepsilon\perp / \Delta\varepsilon$ = 0.49. | | |

**Example 5**

| | | |
|---|---|---|
| 3-GB(2F,3F)XB(F,F)-F | (1-3) | 6% |
| 3-BB(2F,3F)XB(F)-F | (1-4) | 8% |
| 3-BB(2F,3F)XB(F,F)-F | (1-4) | 7% |
| 3-HH-V | (2) | 25% |
| 3-HH-V1 | (2) | 6% |

(continued)

| | | |
|---|---|---|
| 1V2-BB-1 | (3-2) | 4% |
| 5-HBBH-3 | (3-10) | 6% |
| 5-HEB(F,F)-F | (4) | 3% |
| 3-HHB-CL | (4) | 5% |
| 5-HHB-CL | (4) | 4% |
| 3-HHEB(F,F)-F | (4-4) | 4% |
| 5-HHEB(F,F)-F | (4-4) | 4% |
| 3-HBEB(F,F)-F | (4-10) | 3% |
| 5-HBEB(F,F)-F | (4-10) | 3% |
| 4-HHB(F)B(F,F)-F | (4-18) | 7% |
| 4-BB(F)B(F,F)XB(F,F)-F | (4-25) | 5% |
| NI = 83.9°C; $T_c$ < -20°C; $\Delta n$ = 0.105; $\Delta\varepsilon$ = 6.4; $V_{th}$ = 1.69 V; $\eta$ = 12.2 mPa·s; $\gamma 1$ = 82.2 mPa·s; $\varepsilon\perp / \Delta\varepsilon$ = 0.50. | | |

**Example 6**

| | | |
|---|---|---|
| 3-BB(2F,3F)XB(F,F)-F | (1-4) | 10% |
| 3-HBB(2F,3F)XB(F,F)-F | (1-7) | 5% |
| 3-dhBB(2F,3F)XB(F,F)-F | (1-8) | 5% |
| 4-HH-V | (2) | 12% |
| 3-HH-V | (2) | 20% |
| 3-HHB-1 | (3-4) | 6% |
| 3-HHB-3 | (3-4) | 7% |
| 5-HB(F)BH-3 | (3-11) | 2% |
| 3-H2GB(F,F)-F | (4) | 4% |
| 3-GHB(F,F)-F | (4-7) | 3% |
| 5-GB(F)B(F,F)-F | (4-11) | 3% |
| 3-BB(F,F)XB(F,F)-F | (4-16) | 6% |
| 3-GBB(F)B(F,F)-F | (4-19) | 3% |
| 3-BB(F)B(F,F)XB(F)-F | (4-24) | 5% |
| 1O1-HBBH-3 | (-) | 3% |
| 1O1-HBBH-4 | (-) | 3% |
| 1O1-HBBH-5 | (-) | 3% |
| NI = 94.9°C; $T_c$ < -20°C; $\Delta n$ = 0.110; $\Delta\varepsilon$ = 6.1; $V_{th}$ = 1.74 V; $\eta$ = 14.6 mPa·s; $\gamma 1$ = 84.0 mPa·s; $\varepsilon\perp / \Delta\varepsilon$ = 0.48. | | |

**Example 7**

| | | |
|---|---|---|
| 5-HB(2F,3F)B(2F,3F)XB(F,F)-F | (1) | 4% |
| 3-BB(2F,3F)XB(F,F)-F | (1-4) | 9% |
| 3-GBB(2F,3F)XB(F,F)-F | (1-9) | 5% |
| 3-GBB(2F,3F)XB(F)-F | (1-9) | 5% |
| 3-HH-V | (2) | 20% |
| 3-HH-V1 | (2) | 4% |
| 3-HH-VFF | (2) | 3% |
| 3-HHEH-3 | (3-3) | 4% |
| 3-HHEH-5 | (3-3) | 3% |
| 4-HHEH-3 | (3-3) | 4% |
| V2-BB(F)B-1 | (3-6) | 2% |
| 3-HHB-F | (4) | 4% |
| 5-HB-CL | (4-1) | 5% |
| 1-HHXB(F,F)-F | (4-5) | 5% |
| 3-HHXB(F,F)-F | (4-5) | 5% |
| 3-GB(F,F)XB(F,F)-F | (4-12) | 8% |
| 3-HHB(F)B(F,F)-F | (4-18) | 4% |
| 3-HH-5 | (-) | 6% |
| NI = 79.9°C; $T_c$ < -20°C; Δn = 0.092; Δε = 6.3; $V_{th}$ = 1.70 V; η = 12.1 mPa·s; γ1 = 82.0 mPa·s; ε⊥ /Δε = 0.51. | | |

**Example 8**

| | | |
|---|---|---|
| 3-GB(2F,3F)XB(F,F)-F | (1-3) | 10% |
| 3-HBB(2F,3F)XB(F,F)-F | (1-7) | 5% |
| 3-dhBB(2F,3F)XB(F,F)-F | (1-8) | 6% |
| 5-HH-V | (2) | 6% |
| 3-HH-V | (2) | 31% |
| 3-HH-V1 | (2) | 8% |
| 5-B(F)BB-2 | (3-7) | 3% |
| 5-B(F)BB-3 | (3-7) | 2% |
| 3-BB(F)B(F,F)-CF3 | (4-14) | 4% |
| 5-HBBXB(F,F)-F | (4-20) | 8% |
| 3-GB(F)B(F,F)XB(F,F)-F | (4-23) | 2% |
| 4-GB(F)B(F,F)XB(F,F)-F | (4-23) | 5% |
| 5-GB(F)B(F,F)XB(F,F)-F | (4-23) | 7% |
| 3-HH-O1 | (-) | 3% |
| NI = 78.7°C; $T_c$ < -20°C; Δn = 0.105; Δε = 9.1; $V_{th}$ = 1.35 V; η = 13.0 mPa·s; γ1 = 82.7 mPa·s; ε⊥ / Δε = 0.47. | | |

**Example 9**

| | | |
|---|---|---|
| 5-HB(2F,3F)B(2F,3F)XB(F,F)-F | (1) | 4% |
| 3-GB(2F,3F)XB(F,F)-F | (1-3) | 8% |
| 3-GBB(2F,3F)XB(F,F)-F | (1-9) | 5% |
| 3-GBB(2F,3F)XB(F)-F | (1-9) | 5% |
| 3-HH-V | (2) | 18% |
| 4-HH-V | (2) | 10% |
| 5-HH-V | (2) | 10% |
| 5-HB-O2 | (3-1) | 4% |
| V-HHB-1 | (3-4) | 8% |
| 3-HH2BB(F,F)-F | (4) | 3% |
| 4-HH2BB(F,F)-F | (4) | 3% |
| 3-HHB(F,F)-F | (4-3) | 4% |
| 5-HHB(F,F)-F | (4-3) | 3% |
| 3-HBB(F,F)-F | (4-8) | 5% |
| 3-BB(F)B(F,F)XB(F,F)-F | (4-25) | 2% |
| 5-BB(F)B(F,F)XB(F,F)-F | (4-25) | 6% |
| 5-BB(F)B(F,F)XB(F)B(F,F)-F | (4-27) | 2% |
| NI = 85.6°C; $T_c$ < -20°C; $\Delta n$ = 0.103; $\Delta\varepsilon$ = 6.7; $V_{th}$ = 1.66 V; $\eta$ = 14.2 mPa·s; $\gamma 1$ = 83.9 mPa·s; $\varepsilon\perp / \Delta\varepsilon$ = 0.51. | | |

**Example 10**

| | | |
|---|---|---|
| 3-BB(2F,3F)XB(F)-F | (1-4) | 6% |
| 3-BB(2F,3F)XB(F,F)-F | (1-4) | 6% |
| 3-HBB(2F,3F)XB(F,F)-F | (1-7) | 5% |
| 3-dhBB(2F,3F)XB(F,F)-F | (1-8) | 5% |
| 3-HH-V | (2) | 26% |
| 3-HH-V1 | (2) | 5% |
| 3-HH-VFF | (2) | 4% |
| 1V-HBB-2 | (3-5) | 5% |
| 3-HHEBH-4 | (3-9) | 3% |
| 3-HHEBH-5 | (3-9) | 4% |
| 5-HB(F)BH-3 | (3-11) | 5% |
| 5-HXB(F,F)-F | (4-2) | 6% |
| 3-BB(F)B(F,F)-F | (4-13) | 3% |
| 3-HBB(F,F)XB(F,F)-F | (4-21) | 3% |
| 2-BB(F)B(F,F)XB(F)-F | (4-24) | 3% |

(continued)

| | | |
|---|---|---|
| 3-BB(F)B(F,F)XB(F)-F | (4-24) | 3% |
| 4-BB(F)B(F,F)XB(F)-F | (4-24) | 4% |
| 3-HH-4 | (-) | 4% |
| NI = 93.2°C; $T_c$ < -20°C; $\Delta n$ = 0.112; $\Delta\varepsilon$ = 5.4; $V_{th}$ = 1.85 V; $\eta$ = 9.4 mPa·s; $\gamma 1$ = 78.4 mPa·s; $\varepsilon\perp / \Delta\varepsilon$ = 0.51. | | |

**Example 11**

| | | |
|---|---|---|
| 3-BB(2F,3F)XB(F,F)-CF3 | (1-4) | 19% |
| 3-HH-V | (2) | 32% |
| 3-HH-V1 | (2) | 5% |
| V-HHB-1 | (3-4) | 13% |
| 1-BB(F)B-2V | (3-6) | 2% |
| 2-HHBB(F,F)-F | (4-17) | 3% |
| 3-HHBB(F,F)-F | (4-17) | 3% |
| 3-HBBXB(F,F)-F | (4-20) | 8% |
| 3-BB(F)B(F,F)XB(F,F)-F | (4-25) | 2% |
| 4-BB(F)B(F,F)XB(F,F)-F | (4-25) | 7% |
| 5-BB(F)B(F,F)XB(F,F)-F | (4-25) | 6% |
| NI = 85.9°C; $T_c$ < -20°C; $\Delta n$ = 0.117; $\Delta\varepsilon$ = 9.4; $V_{th}$ = 1.49 V; $\eta$ = 11.6 mPa·s; $\gamma 1$=81.9 mPa·s; $\varepsilon\perp / \Delta\varepsilon$ = 0.48. | | |

**Example 12**

| | | |
|---|---|---|
| 3-HH1OB(2F,3F)XB(F,F)-F | (1) | 6% |
| 3-BB(2F,3F)XB(F,F)-F | (1-4) | 8% |
| 4-BBB(2F,3F)XB(F,F)-F | (1-10) | 7% |
| 4-HH-V | (2) | 20% |
| 4-HH-V1 | (2) | 12% |
| 7-HB-1 | (3-1) | 3% |
| 3-HHEH-3 | (3-3) | 3% |
| 3-HHEH-5 | (3-3) | 4% |
| 3-HBB-2 | (3-5) | 3% |
| 5-B(F)BB-2 | (3-7) | 5% |
| 5-B(F)BB-3 | (3-7) | 3% |
| 3-HHXB(F,F)-CF3 | (4) | 6% |
| 3-HB-CL | (4-1) | 3% |
| 3-HBB(F,F)-F | (4-8) | 3% |
| 3-GB(F,F)XB(F,F)-F | (4-12) | 5% |

(continued)

| | | |
|---|---|---|
| 3-HBB(F,F)XB(F,F)-F | (4-21) | 3% |
| 3-BB(F,F)XB(F)B(F,F)-F | (4-26) | 3% |
| 5-BB(F)B(F,F)XB(F)B(F,F)-F | (4-27) | 3% |
| NI = 80.7°C; $T_c$ < -20°C; $\Delta n$ = 0.112; $\Delta\varepsilon$ = 5.9; $V_{th}$ = 1.70 V; $\eta$ = 14.5 mPa·s; $\gamma 1$ = 84.0 mPa·s; $\varepsilon\perp / \Delta\varepsilon$ = 0.50. | | |

**Example 13**

| | | |
|---|---|---|
| 5-HBB(2F,3F)XB(F)B(F,F)-F | (1) | 5% |
| 3-HBB(2F,3F)XB(F)-OCF3 | (1-7) | 5% |
| 3-BB(2F,3F)XB(F)B(F,F)-F | (1-13) | 5% |
| 3-HH-V | (2) | 10% |
| 3-HH-V1 | (2) | 5% |
| 3-HH-VFF | (2) | 22% |
| V2-BB-1 | (3-2) | 5% |
| 3-HB(F)HH-2 | (3-8) | 4% |
| 5-HBB(F)B-2 | (3-12) | 4% |
| 5-HXB(F,F)-F | (4-2) | 4% |
| 3-HHXB(F,F)-F | (4-5) | 6% |
| 3-BBXB(F,F)-F | (4-15) | 3% |
| 3-BB(F,F)XB(F,F)-F | (4-16) | 3% |
| 3-dhBB(F,F)XB(F,F)-F | (4-22) | 5% |
| 3-GB(F)B(F,F)XB(F,F)-F | (4-23) | 5% |
| 5-GB(F)B(F,F)XB(F,F)-F | (4-23) | 4% |
| 1O1-HBBH-5 | (-) | 5% |
| NI = 92.7°C; $T_c$ < -20°C; $\Delta n$ = 0.116; $\Delta\varepsilon$ = 8.1; $V_{th}$ =1.50 V; $\eta$ = 13.0 mPa·s; $\gamma 1$ = 76.5 mPa·s; $\varepsilon\perp / \Delta\varepsilon$ = 0.47. | | |

**Example 14**

| | | |
|---|---|---|
| 3-B(2F,3F)XB(F,F)-F | (1-1) | 5% |
| 3-BB(2F,3F)XB(F,F)-F | (1-4) | 10% |
| 2O-BB(2F,3F)XB(F,F)-F | (1-4) | 6% |
| 1V2-HH-1 | (2) | 10% |
| 1V2-HH-3 | (2) | 12% |
| 3-HH-V | (2) | 19% |
| 3-BB(2F,5F)B-3 | (3) | 3% |
| 3-HHEBH-3 | (3-9) | 5% |

(continued)

| | | |
|---|---|---|
| 3-HHEBH-5 | (3-9) | 5% |
| 3-HHB(F,F)-F | (4-3) | 6% |
| 3-HGB(F,F)-F | (4-6) | 3% |
| V-HB(F)B(F,F)-F | (4-9) | 5% |
| 3-BB(F)B(F,F)-F | (4-13) | 3% |
| 3-BB(F)B(F,F)XB(F)-F | (4-24) | 3% |
| 4-BB(F)B(F,F)XB(F)-F | (4-24) | 5% |
| NI = 75.6°C; $T_c$ < -20°C; $\Delta n$ = 0.099; $\Delta\varepsilon$ = 5.5; $V_{th}$ = 1.83 V; $\eta$ = 9.2 mPa·s; $\gamma1$ = 73.5 mPa·s; $\varepsilon\perp / \Delta\varepsilon$ = 0.50. | | |

**Example 15**

| | | |
|---|---|---|
| 3-BB(2F,3F)XB(F,F)-F | (1-4) | 7% |
| 2O-BB(2F,3F)XB(F,F)-CF3 | (1-4) | 6% |
| 2O-BB(2F,3F)XB(F)-OCF3 | (1-4) | 8% |
| 3-HH-V | (2) | 25% |
| 3-HH-V1 | (2) | 6% |
| 1V2-BB-1 | (3-2) | 4% |
| 5-HBBH-3 | (3-10) | 6% |
| 5-HEB(F,F)-F | (4) | 3% |
| 3-HHB-CL | (4) | 5% |
| 5-HHB-CL | (4) | 4% |
| 3-HHEB(F,F)-F | (4-4) | 4% |
| 5-HHEB(F,F)-F | (4-4) | 4% |
| 3-HBEB(F,F)-F | (4-10) | 3% |
| 5-HBEB(F,F)-F | (4-10) | 3% |
| 4-HHB(F)B(F,F)-F | (4-18) | 7% |
| 4-BB(F)B(F,F)XB(F,F)-F | (4-25) | 5% |
| NI = 89.3°C; $T_c$ < -20°C; $\Delta n$ = 0.112; $\Delta\varepsilon$ = 7.3; $V_{th}$ = 1.62 V; $\eta$ = 13.1 mPa·s; $\gamma1$ = 84.1 mPa·s; $\varepsilon\perp / \Delta\varepsilon$ = 0.49. | | |

**Example 16**

| | | |
|---|---|---|
| 3-BB(2F,3F)XB(F,F)-F | (1-4) | 10% |
| 1V2-BB(2F,3F)XB(F,F)-F | (1-4) | 5% |
| 1V2-BB(2F,3F)XB(F,F)-CF3 | (1-4) | 5% |
| 4-HH-V | (2) | 12% |
| 3-HH-V | (2) | 20% |
| 3-HHB-1 | (3-4) | 6% |

(continued)

| | | |
|---|---|---|
| 3-HHB-3 | (3-4) | 1% |
| 5-HB(F)BH-3 | (3-11) | 2% |
| 3-H2GB(F,F)-F | (4) | 4% |
| 3-GHB(F,F)-F | (4-7) | 3% |
| 5-GB(F)B(F,F)-F | (4-11) | 3% |
| 3-BB(F,F)XB(F,F)-F | (4-16) | 6% |
| 3-GBB(F)B(F,F)-F | (4-19) | 3% |
| 3-BB(F)B(F,F)XB(F)-F | (4-24) | 5% |
| 1O1-HBBH-3 | (-) | 3% |
| 1O1-HBBH-4 | (-) | 3% |
| 1O1-HBBH-5 | (-) | 3% |
| NI = 86.3°C; $T_c$ < -20°C; Δn = 0.109; Δε = 6.9; $V_{th}$ = 1.70 V; η = 12.2 mPa·s; γ1 = 80.2 mPa·s; ε⊥ / Δε = 0.48. | | |

**Example 17**

| | | |
|---|---|---|
| 3-BB(2F,3F)XB(F,F)-F | (1-4) | 9% |
| 2O-BB(2F,3F)XB(F,F)-F | (1-4) | 5% |
| 3-BB(2F,3F)XB(F)B(F,F)-F | (1-13) | 4% |
| 3-GBB(2F,3F)XB(F)-F | (1-9) | 5% |
| 3-HH-V | (2) | 20% |
| 3-HH-V1 | (2) | 4% |
| 3-HH-VFF | (2) | 3% |
| 3-HHEH-3 | (3-3) | 4% |
| 3-HHEH-5 | (3-3) | 3% |
| 4-HHEH-3 | (3-3) | 4% |
| V2-BB(F)B-1 | (3-6) | 2% |
| 3-HHB-F | (4) | 4% |
| 5-HB-CL | (4-1) | 5% |
| 1-HHXB(F,F)-F | (4-5) | 5% |
| 3-HHXB(F,F)-F | (4-5) | 5% |
| 3-GB(F,F)XB(F,F)-F | (4-12) | 8% |
| 3-HHB(F)B(F,F)-F | (4-18) | 4% |
| 3-HH-5 | (-) | 6% |
| NI = 75.2°C; $T_c$ < -20°C; Δn = 0.092; Δε = 6.5; $V_{th}$ = 1.68V; η = 9.5 mPa·s; γ1 = 72.6 mPa·s; ε⊥ / Δε = 0.50. | | |

**Example 18**

| | | |
|---|---|---|
| 3-BB(2F,3F)XB(F,F)-CF3 | (1-4) | 10% |
| 3-HBB(2F,3F)XB(F,F)-F | (1-7) | 5% |
| 4-BBB(2F,3F)XB(F,F)-F | (1-10) | 6% |
| 5-HH-V | (2) | 6% |
| 3-HH-V | (2) | 31% |
| 3-HH-V1 | (2) | 8% |
| 5-B(F)BB-2 | (3-7) | 3% |
| 5-B(F)BB-3 | (3-7) | 2% |
| 3-BB(F)B(F,F)-CF3 | (4-14) | 4% |
| 5-HBBXB(F,F)-F | (4-20) | 8% |
| 3-GB(F)B(F,F)XB(F,F)-F | (4-23) | 2% |
| 4-GB(F)B(F,F)XB(F,F)-F | (4-23) | 5% |
| 5-GB(F)B(F,F)XB(F,F)-F | (4-23) | 7% |
| 3-HH-O1 | (-) | 3% |
| NI = 78.2°C; $T_c$ < -20°C; $\Delta n$ = 0.113; $\Delta\varepsilon$ = 9.2; $V_{th}$ = 1.34V; $\eta$ = 12.1 mPa·s; $\gamma 1$ = 77.3 mPa·s; $\varepsilon\perp / \Delta\varepsilon$ = 0.48. | | |

The viscosity ($\eta$) of the composition in Comparative Example 1 or 2 was 16.6 or 20.2, respectively. On the other hand, the viscosity of the composition in Examples 1 to 18 was 9.2 to 14.6. Thus, the composition in the Examples had a smaller viscosity in comparison with the composition in Comparative Examples. Accordingly, the liquid crystal composition of the invention is concluded to have superb characteristics.

## Industrial Applicability

A liquid crystal composition of the invention satisfies at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light, a high stability to heat or a large elastic constant, or has a suitable balance regarding at least two of the characteristics. A liquid crystal display device including the composition has characteristics such as a short response time, a large voltage holding ratio, a large contrast ratio or a long service life, and thus can be used for a liquid crystal projector, a liquid crystal television and so forth.

## Claims

**1.** A liquid crystal composition that has a nematic phase and contains at least one compound selected from the group of compounds represented by formula (1) as a first component, and at least one compound selected from the group of compounds represented by formula (2) as a second component:

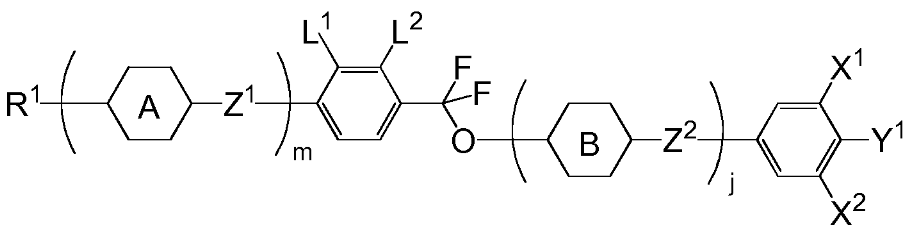

(1)

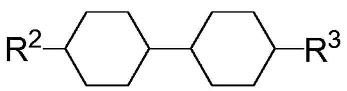

(2)

wherein, in formula (1) and formula (2), $R^1$ or $R^2$ is independently alkyl having 1 to 12 carbons, alkoxy having 1 to 12 carbons or alkenyl having 2 to 12 carbons; $R^3$ is alkenyl having 2 to 12 carbons, or alkenyl having 2 to 12 carbons in which at least one of hydrogen is replaced by fluorine; ring A or ring B is independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ or $Z^2$ is independently a single bond, ethylene, vinylene, methyleneoxy, carbonyloxy or difluoromethyleneoxy; $L^1$ or $L^2$ is independently fluorine or chlorine; $X^1$ or $X^2$ is independently hydrogen or fluorine; $Y^1$ is fluorine, chlorine, alkyl having 1 to 12 carbons in which at least one of hydrogen is replaced by halogen or alkoxy having 1 to 12 carbons in which at least one of hydrogen is replaced by halogen; and m or j is independently 0, 1, 2 or 3, and a sum of m and j is 3 or less.

**2.** The liquid crystal composition according to claim 1, containing at least one compound selected from the group of compounds represented by formula (1-1) to formula (1-14) as the first component:

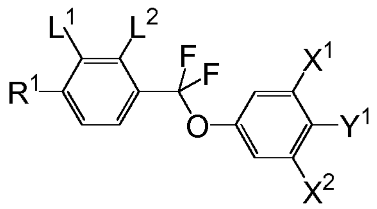
(1-1)

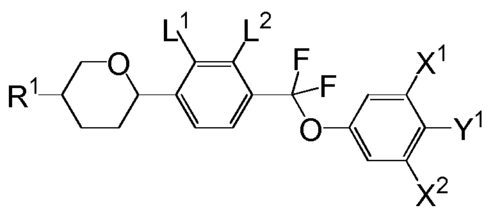
(1-2)

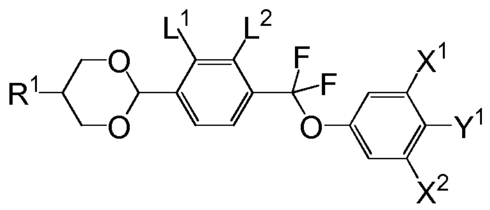
(1-3)

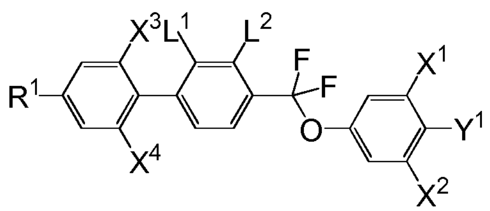
(1-4)

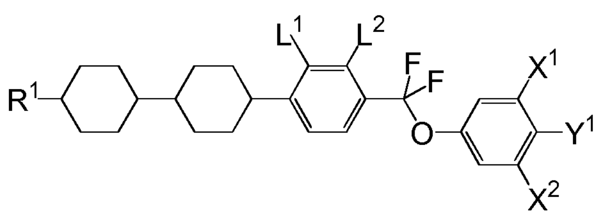
(1-5)

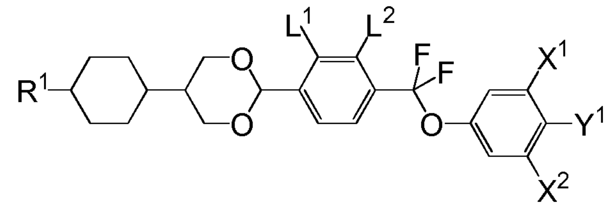

(1-6)

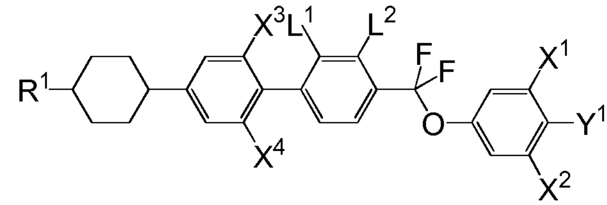

(1-7)

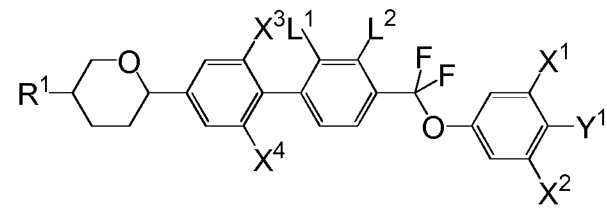

(1-8)

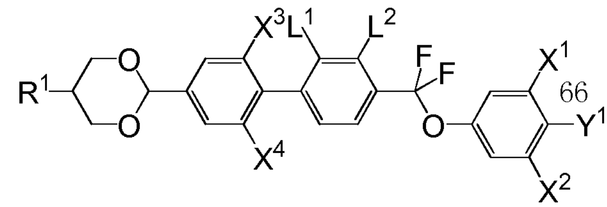

(1-9)

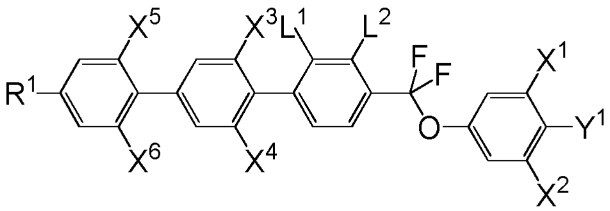

(1-10)

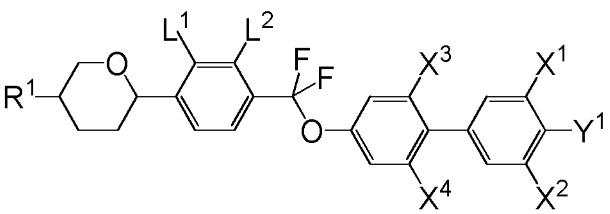

(1-11)

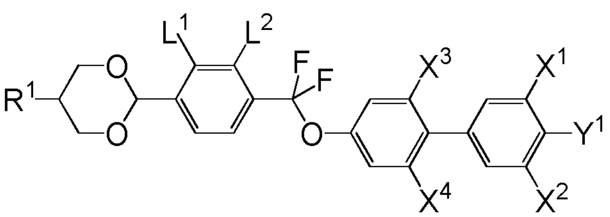

(1-12)

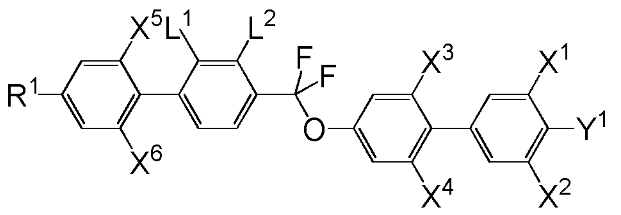

(1-13)

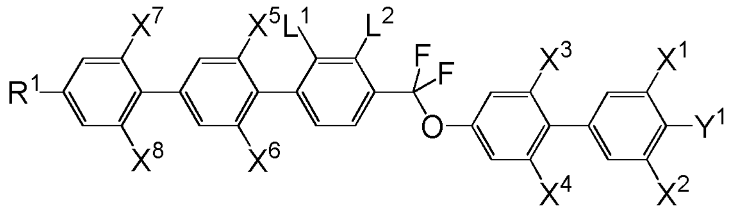

(1-14)

wherein, in formula (1-1) to formula (1-14), $R^1$ is alkyl having 1 to 12 carbons, alkoxy having 1 to 12 carbons or alkenyl having 2 to 12 carbons; $L^1$ or $L^2$ is independently fluorine or chlorine; $X^1$, $X^2$, $X^3$, $X^4$, $X^5$, $X^6$, $X^7$ or $X^8$ is independently hydrogen or fluorine; and $Y^1$ is fluorine, chlorine, alkyl having 1 to 12 carbons in which at least one of hydrogen is replaced by halogen or alkoxy having 1 to 12 carbons in which at least one of hydrogen is replaced by halogen.

**3.** The liquid crystal composition according to claim 1 or 2, wherein a ratio of the first component is in the range of 5% by weight to 40% by weight, and a ratio of the second component is in the range of 15% by weight to 60% by weight, based on the weight of the liquid crystal composition.

**4.** The liquid crystal composition according to any one of claims 1 to 3, containing at least one compound selected from the group of compounds represented by formula (3) as a third component:

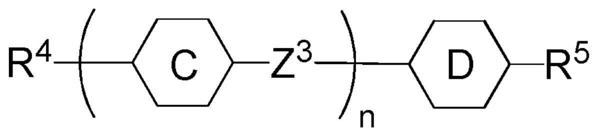

(3)

wherein, in formula (3), $R^4$ or $R^5$ is independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring C or ring D is independently 1,4-cyclohexylene, 1,4-phenylene, 2-fluoro-1,4-phenylene or 2,5-difluoro-1,4-phenylene; $Z^3$ is a single bond, ethylene or carbonyloxy, and n is 1, 2 or 3; and, however, when n is 1, ring C is 1,4-phenylene.

**5.** The liquid crystal composition according to any one of claims 1 to 4, containing at least one compound selected from the group of compounds represented by formula (3-1) to formula (3-12) as the third component:

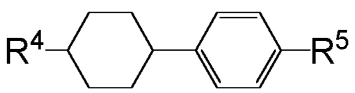

(3-1)

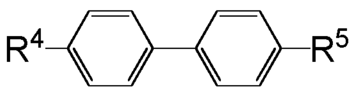

(3-2)

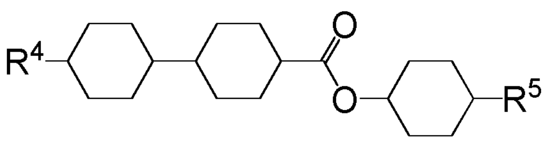

(3-3)

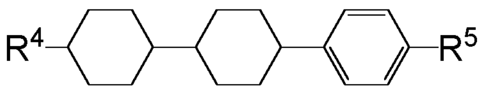 (3-4)

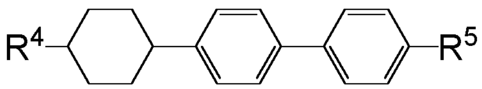 (3-5)

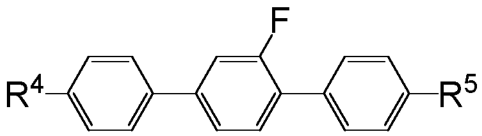 (3-6)

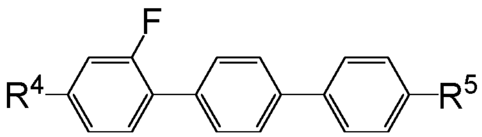 (3-7)

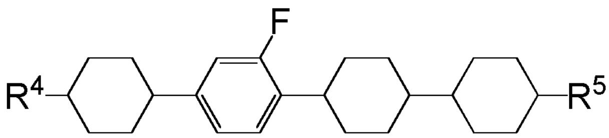 (3-8)

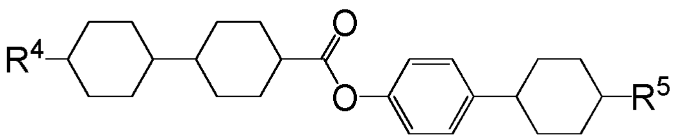 (3-9)

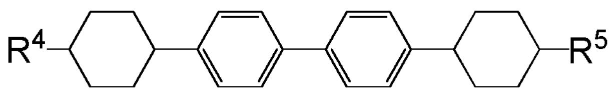 (3-10)

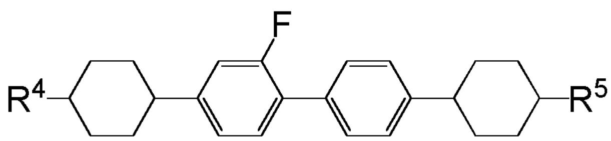 (3-11)

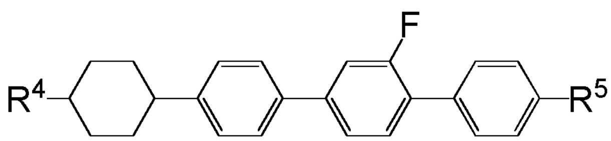 (3-12)

wherein, in formula (3-1) to formula (3-12), $R^4$ or $R^5$ is independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

**6.** The liquid crystal composition according to claim 4 or 5, wherein a ratio of the third component is in the range of 5% by weight to 35% by weight based on the weight of the liquid crystal composition.

**7.** The liquid crystal composition according to any one of claims 1 to 6, containing at least one compound selected from the group of compounds represented by formula (4) as a fourth component:

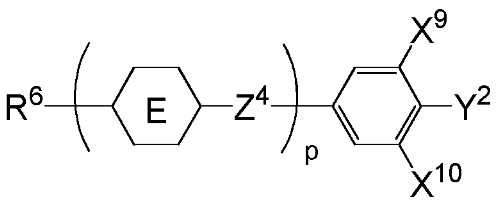

(4)

wherein, in formula (4), $R^6$ is alkyl having 1 to 12 carbons, alkoxy having 1 to 12 carbons or alkenyl having 2 to 12 carbons; ring E is 1,4-cyclohexylene, 1,4-phenylene, 2-fluoro-1,4-phenylene, 2,6-difluoro-1,4-phenylene, pyrimidine-2,5-diyl, 1,3-dioxane-2,5-diyl or tetrahydropyran-2,5-diyl; $Z^4$ is a single bond, ethylene, carbonyloxy or difluoromethyleneoxy; $X^9$ or $X^{10}$ is independently hydrogen or fluorine; $Y^2$ is fluorine, chlorine, alkyl having 1 to 12 carbons in which at least one of hydrogen is replaced by halogen or alkoxy having 1 to 12 carbons in which at least one of hydrogen is replaced by halogen; and p is 1, 2, 3 or 4.

**8.** The liquid crystal composition according to any one of claims 1 to 7, containing at least one compound selected from the group of compounds represented by formula (4-1) to formula (4-27) as the fourth component:

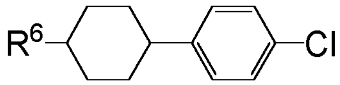

(4-1)

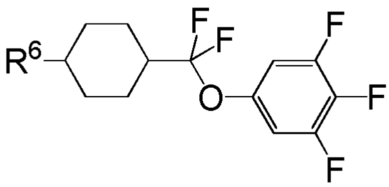

(4-2)

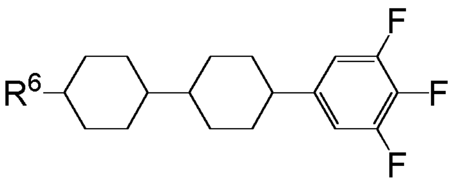

(4-3)

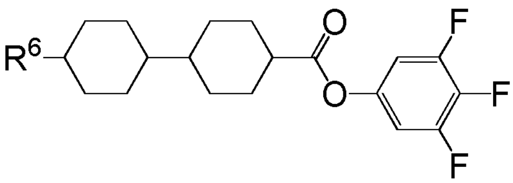

(4-4)

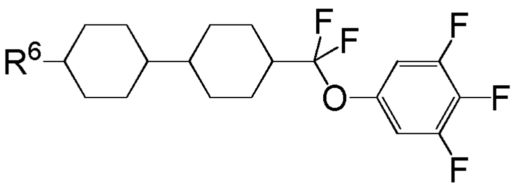

(4-5)

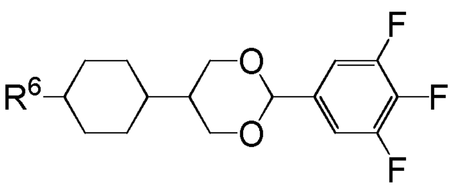

(4-6)

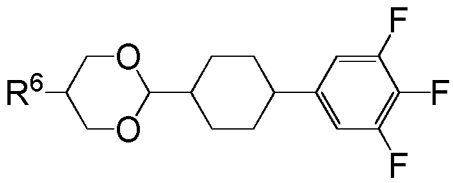

(4-7)

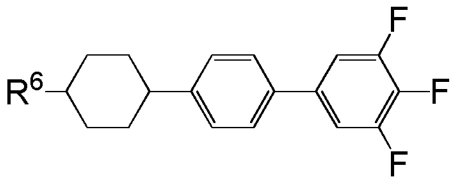

(4-8)

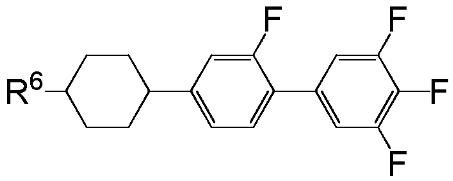

(4-9)

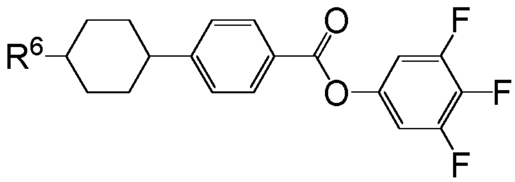

(4-10)

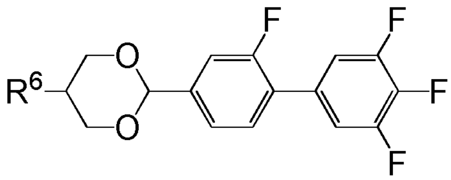

(4-11)

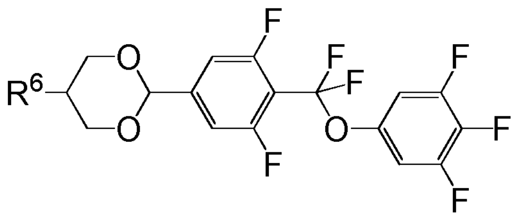

(4-12)

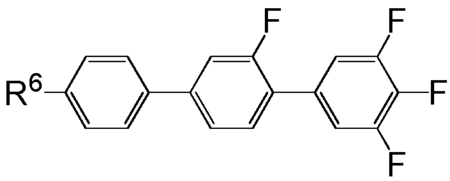

(4-13)

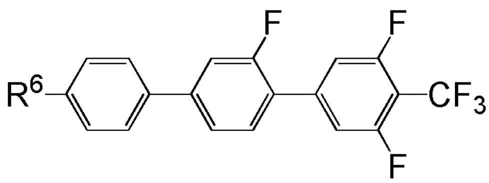

(4-14)

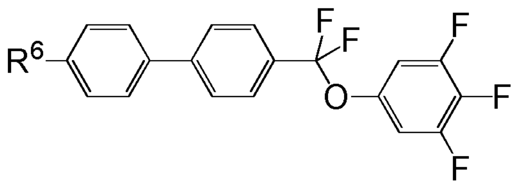

(4-15)

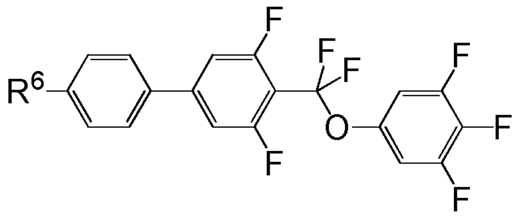

(4-16)

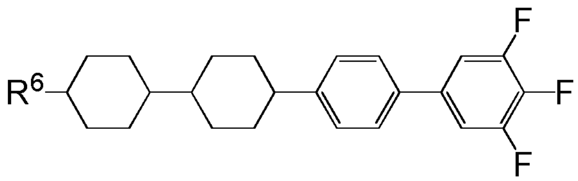

(4-17)

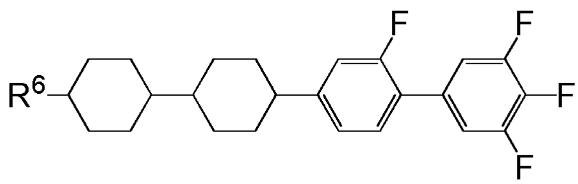

(4-18)

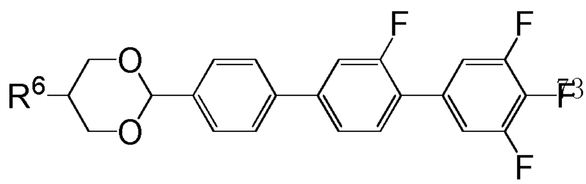

(4-19)

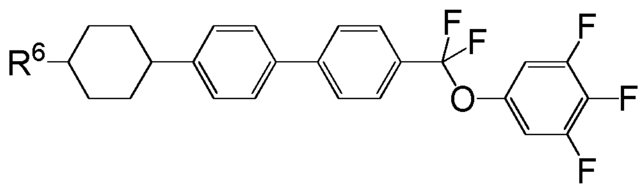

(4-20)

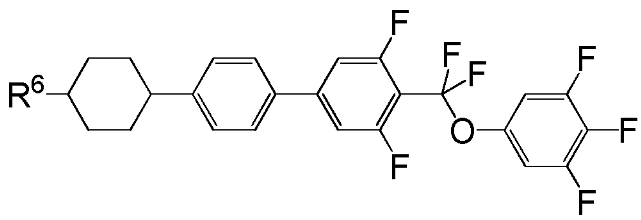

(4-21)

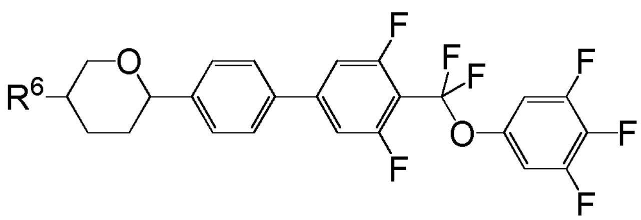

(4-22)

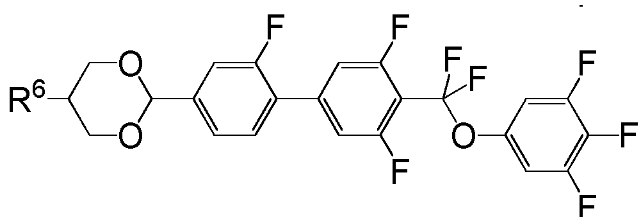

(4-23)

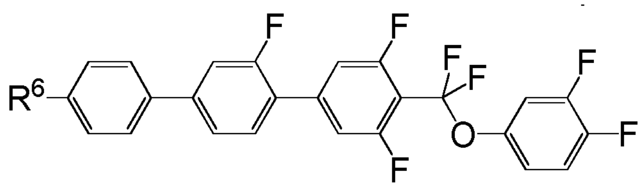

(4-24)

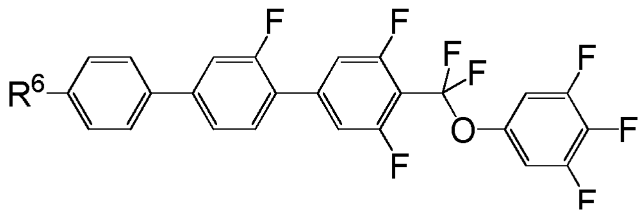

(4-25)

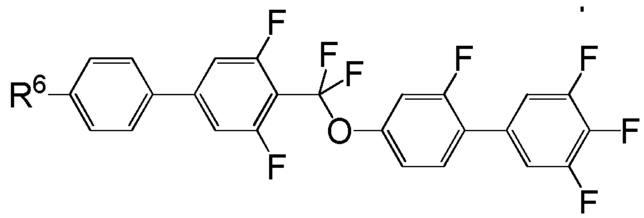

(4-26)

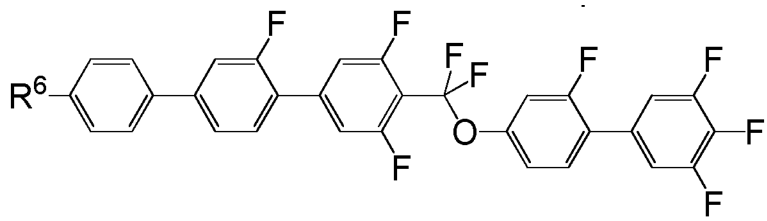

(4-27)

wherein, in formula (4-1) to formula (4-27), $R^6$ is alkyl having 1 to 12 carbons, alkoxy having 1 to 12 carbons or alkenyl having 2 to 12 carbons.

**9.** The liquid crystal composition according to claim 7 or 8, wherein a ratio of the fourth component is in the range of 10% by weight to 60% by weight based on the weight of the liquid crystal composition.

**10.** The liquid crystal composition according to any one of claims 1 to 9, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.

**11.** A liquid crystal display device, including the liquid crystal composition according to any one of claims 1 to 10.

**12.** The liquid crystal display device according to claim 11, wherein an operating mode in the liquid crystal display device includes a TN mode, an ECB mode, an OCB mode, an IPS mode, an FFS mode or an FPA mode, and a driving mode in the liquid crystal display device includes an active matrix mode.

**13.** Use of the liquid crystal composition according to any one of claim 1 to 10 in a liquid crystal display device.

## Patentansprüche

1. Eine Flüssigkristallzusammensetzung, welche eine nematische Phase aufweist und als erste Komponente mindestens eine Verbindung ausgewählt aus der Gruppe von Verbindungen, die durch Formel (1) dargestellt werden, und als zweite Komponente mindestens eine Verbindung ausgewählt aus der Gruppe von Verbindungen, die durch Formel (2) dargestellt werden, enthält:

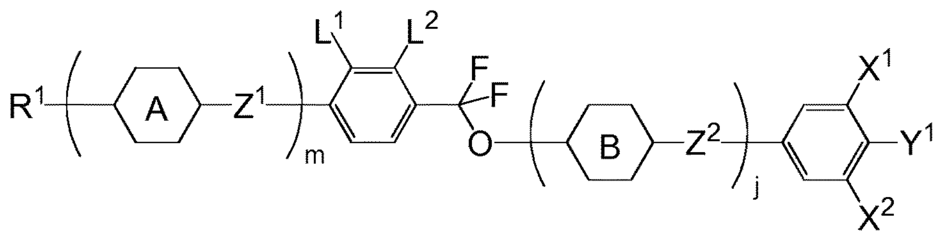
(1)

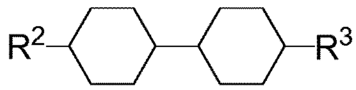
(2)

wobei, in Formel (1) und in Formel (2), $R^1$ oder $R^2$ unabhängig Alkyl mit 1 bis 12 Kohlenstoffatomen, Alkoxy mit 1 bis 12 Kohlenstoffatomen oder Alkenyl mit 2 bis 12 Kohlenstoffatomen, sind;

$R^3$ Alkenyl mit 2 bis 12 Kohlenstoffatomen oder Alkenyl mit 2 bis 12 Kohlenstoffatomen, in welchem mindestens ein Wasserstoff durch Fluor ersetzt ist, ist;
Ring A oder Ring B unabhängig 1,4-Cyclohexylen, 1,4-Phenylen, 2-Fluor-1,4-phenylen, 2,3-Difluor-1,4-phenylen, 2,6-Difluor-1,4-phenylen, Pyrimidin-2,5-diyl, 1,3-Dioxan-2,5-diyl oder Tetrahydropyran-2,5-diyl, sind;
$Z^1$ oder $Z^2$ unabhängig eine Einfachbindung, Ethylene, Vinylen, Methylenoxy, Carbonyloxy oder Difluormethylenoxy sind;
$L^1$ oder $L^2$ unabhängig Fluor oder Chlor sind;
$X^1$ oder $X^2$ unabhängig Wasserstoff oder Fluor sind;
$Y^1$ Fluor, Chlor, Alkyl mit 1 bis 12 Kohlenstoffatomen, in welchem mindestens ein Wasserstoff durch Halogen ersetzt ist oder Alkoxy mit 1 bis 12 Kohlenstoffatomen ist, in welchem mindestens ein Wasserstoff durch ein Halogen ersetzt ist, ist; und
m oder j unabhängig 0, 1, 2 oder 3 sind und die Summe von m und j 3 oder weniger ist.

2. Die Flüssigkristallzusammensetzung gemäß Anspruch 1, enthalten als erste Komponente mindestens eine Verbindung, welche ausgewählt ist aus der Gruppe von Verbindungen, die durch die Formel (1-1) bis Formel (1-4) dargestellt werden:

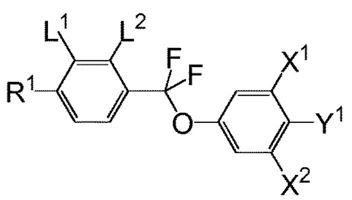
(1-1)

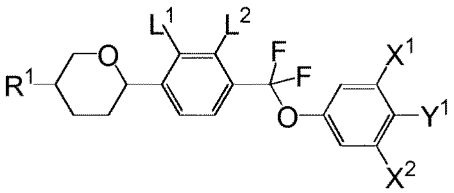
(1-2)

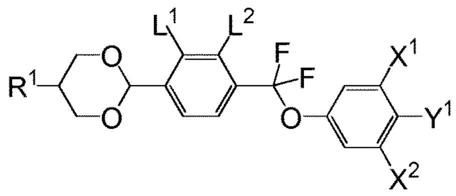

(1-3)

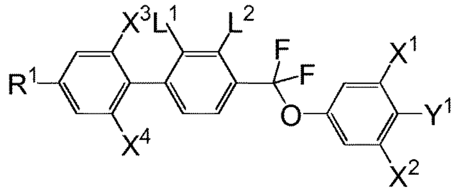

(1-4)

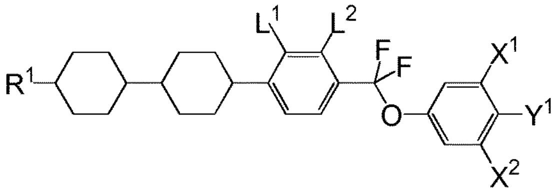

(1-5)

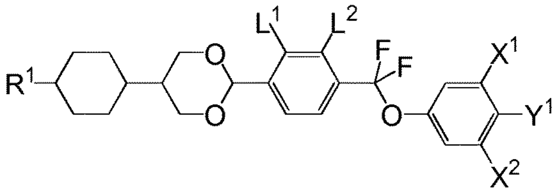

(1-6)

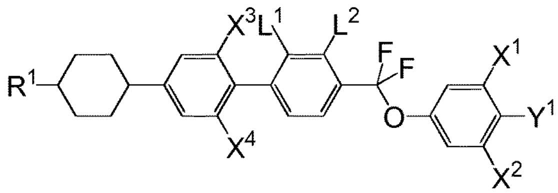

(1-7)

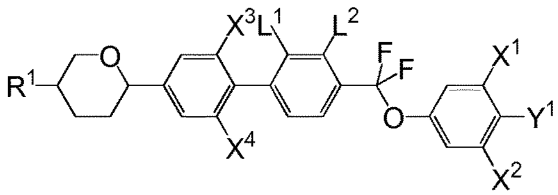

(1-8)

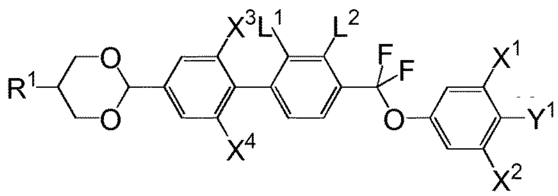

(1-9)

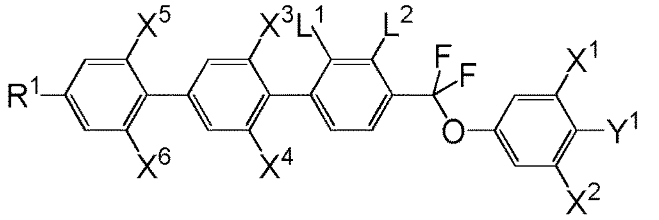

(1-10)

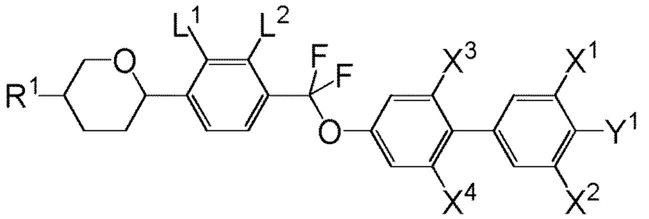

(1-11)

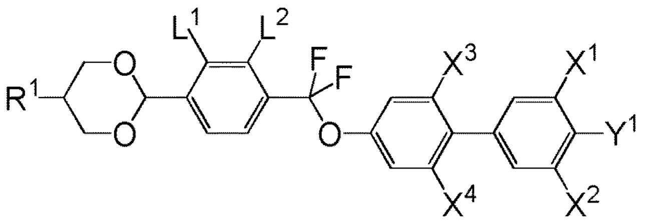

(1-12)

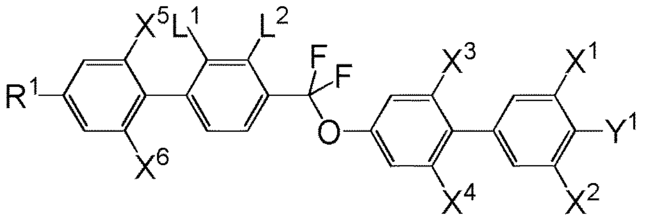

(1-13)

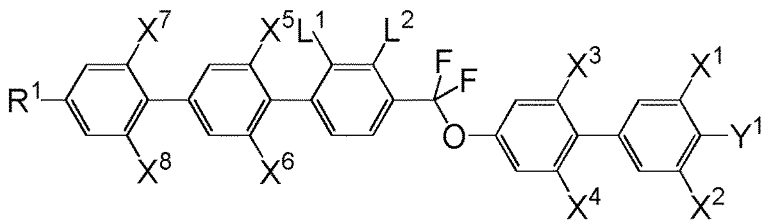

(1-14)

wobei, in Formel (1-1) bis Formel (1-14),

$R^1$ Alkyl mit 1 bis 12 Kohlenstoffatomen, Alkoxy mit 1 bis 12 Kohlenstoffatomen oder Alkenyl mit 2 bis 12 Kohlenstoffatomen ist;
$L^1$ oder $L^2$ unabhängig Fluor oder Chlor sind;
$X^1$, $X^2$, $X^3$, $X^4$, $X^5$, $X^6$, $X^7$ oder $X^8$ unabhängig Wasserstoff oder Fluor sind; und
$Y^1$ Fluor, Chlor, Alkyl mit 1 bis 12 Kohlenstoffatomen, in welchem mindestens ein Wasserstoff durch Halogen ersetzt ist oder Alkoxy mit 1 bis 12 Kohlenstoffatomen, in welchem mindestens ein Wasserstoff durch Halogen ersetzt ist, ist.

**3.** Die Flüssigkristallzusammensetzung gemäß Anspruch 1 oder 2, wobei der Anteil der ersten Komponente im Bereich von 5 Gew.-% bis 40 Gew.-% liegt, und der Anteil der zweiten Komponente im Bereich von 15 Gew.-% bis 60 Gew.-% liegt, basierend auf dem Gesamtgewicht der Flüssigkristallzusammensetzung.

4. Die Flüssigkristallzusammensetzung gemäß einem der Ansprüche 1 bis 3, enthaltend als dritte Komponente mindestens eine Verbindung ausgewählt aus der Gruppe der Verbindungen, die durch Formel (3) dargestellt werden:

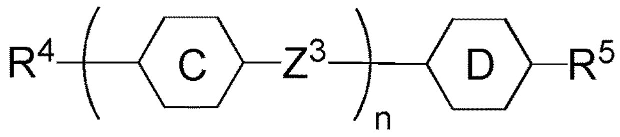

(3)

wobei, in Formel (3),

$R^4$ und $R^5$ unabhängig Alkyl mit 1 bis 12 Kohlenstoffatomen, Alkoxy mit 1 bis 12 Kohlenstoffatomen, Alkenyl mit 2 bis 12 Kohlenstoffatomen oder Alkenyl mit 2 bis 12 Kohlenstoffatomen, in welchem mindestens ein Wasserstoff durch Fluor ersetzt ist, sind;
Ring C oder D unabhängig 1,4-Cyclohexylen, 1,4-Phenylen, 2-Fluor-1,4-phenylen oder 2,5-Difluor-1,4-phenylen sind;
$Z^3$ unabhängig eine Einfachbindung, Ethylen oder Carbonyloxy ist; und
n 1, 2 oder 3 ist; und jedoch, wenn n gleich 1 ist, der Ring C 1,4-Phenylen ist.

5. Die Flüssigkristallzusammensetzung gemäß einem der Ansprüche 1 bis 4, enthaltend als die dritte Komponente mindestens eine Verbindung ausgewählt aus der Gruppe der Verbindungen, die durch Formel (3-1) bis Formel (3-12) dargestellt werden:

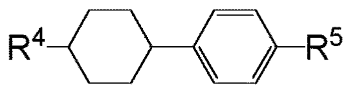

(3-1)

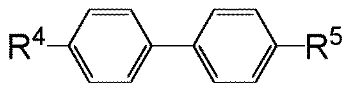

(3-2)

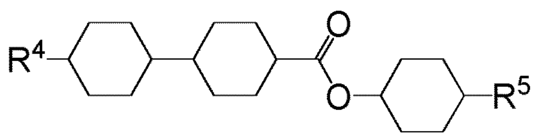

(3-3)

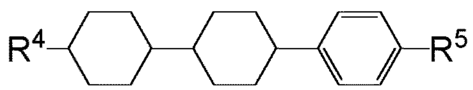

(3-4)

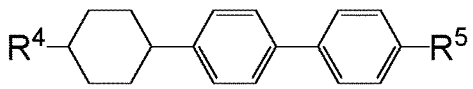

(3-5)

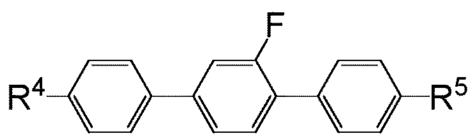

(3-6)

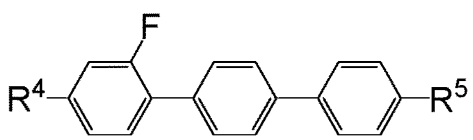

(3-7)

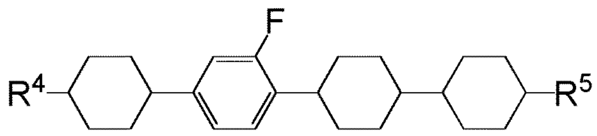

(3-8)

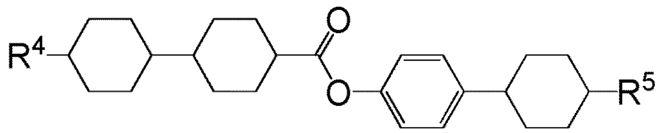

(3-9)

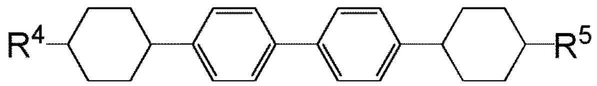

(3-10)

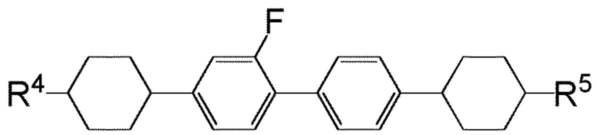

(3-11)

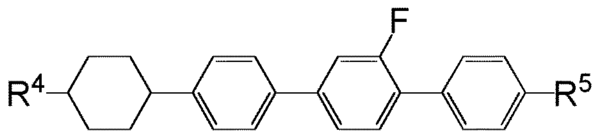

(3-12)

wobei, in Formel (3-1) bis Formel (3-12),
$R^4$ und $R^5$ unabhängig Alkyl mit 1 bis 12 Kohlenstoffatomen, Alkoxy mit 1 bis 12 Kohlenstoffatomen, Alkenyl mit 2 bis 12 Kohlenstoffatomen oder Alkenyl mit 2 bis 12 Kohlenstoffatomen, in welchem mindestens ein Wasserstoff durch Fluor ersetzt ist, sind.

**6.** Die Flüssigkristallzusammensetzung gemäß Anspruch 4 oder 5, wobei der Anteil an der dritten Komponente im Bereich von 5 Gew.-% bis 35 Gew.-%, basierend auf dem Gewicht der Flüssigkristallzusammensetzung, liegt.

**7.** Die Flüssigkristallzusammensetzung gemäß einem der Ansprüche 1 bis 6, enthaltend als eine vierte Komponente mindestens eine Verbindung, welche ausgewählt aus der Gruppe der Verbindungen ist, die durch die Formel (4) dargestellt werden:

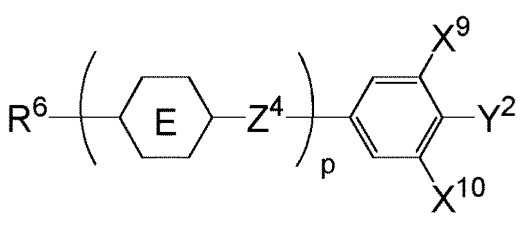

(4)

wobei, in Formel (4),

$R^6$ Alkyl mit 1 bis 12 Kohlenstoffatomen, Alkoxy mit 1 bis 12 Kohlenstoffatomen oder Alkenyl mit 2 bis 12 Kohlenstoffatomen ist;
Ring E 1,4-Cyclohexylen, 1,4-Phenylen, 2-Fluor-1,4-phenylen, 2,6-Difluor-1,4-phenylen, Pyrimidin-2,5-diyl, 1,3-Dioxan-2,5-diyl oder Tetrahydropyran-2,5-diyl ist;
$Z^4$ eine Einfachbindung, Ethylen, Carbonyloxy oder Difluormethylenoxy ist;
$X^9$ oder $X^{10}$ unabhängig Wasserstoff oder Fluor sind;
$Y^2$ Fluor, Chlor oder Alkyl mit 1 bis 12 Kohlenstoffatomen, in welchem mindestens ein Wasserstoff durch ein Halogen ersetzt ist oder Alkoxy mit 1 bis 12 Kohlenstoffatomen, in welchem mindestens ein Wasserstoff durch

Halogen ersetzt ist, ist; und
p gleich 1, 2, 3 oder 4 ist.

**8.** Die Flüssigkristallzusammensetzung gemäß einem der Ansprüche 1 bis 7, enthaltend als die vierte Komponente mindestens eine Verbindung, welche ausgewählt aus der Gruppe der Verbindungen ist, welche durch die Formel (4-1) bis (4-27) dargestellt werden:

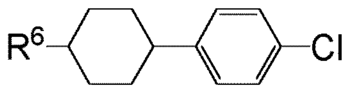
(4-1)

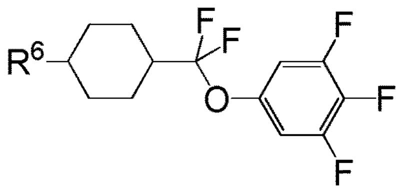
(4-2)

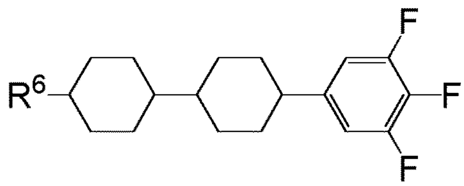
(4-3)

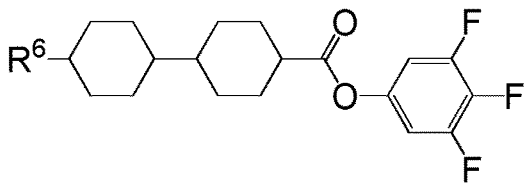
(4-4)

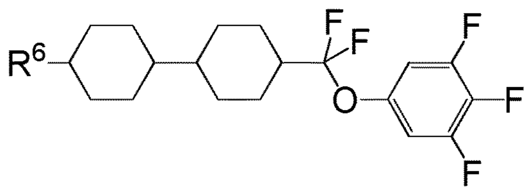
(4-5)

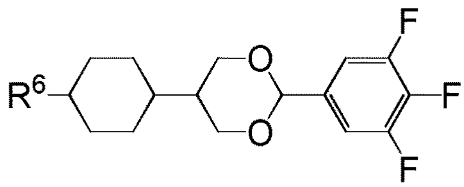
(4-6)

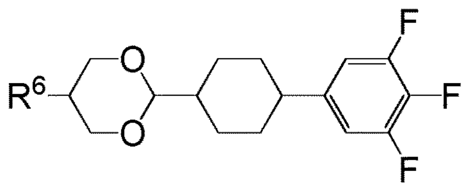
(4-7)

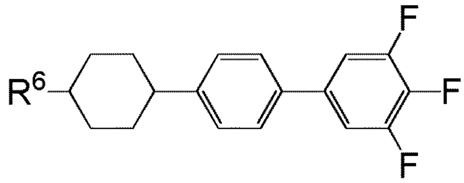

(4-8)

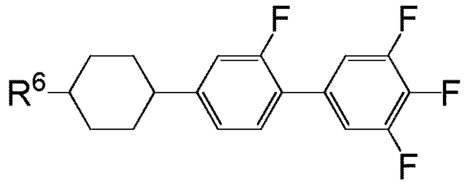

(4-9)

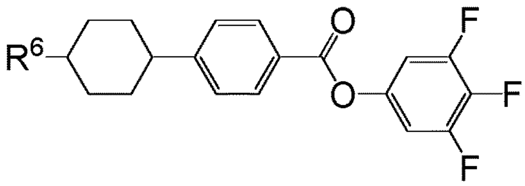

(4-10)

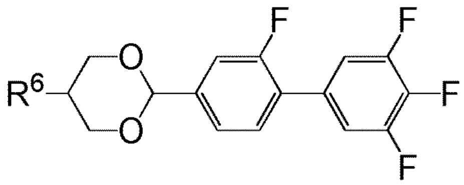

(4-11)

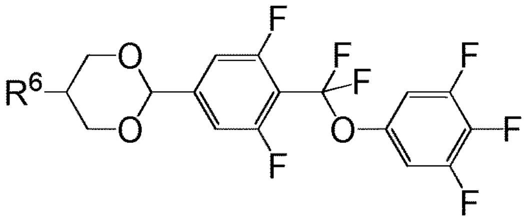

(4-12)

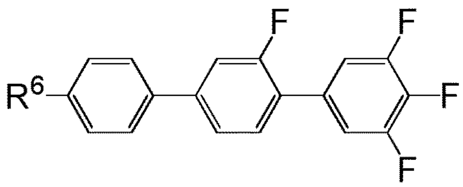

(4-13)

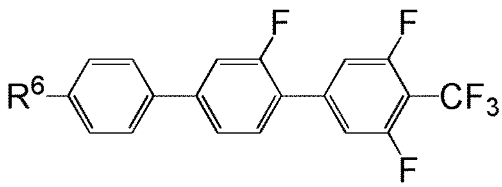

(4-14)

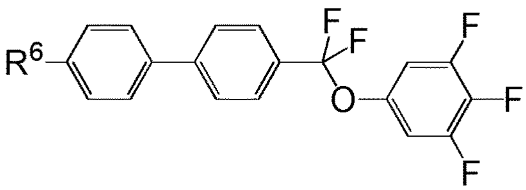

(4-15)

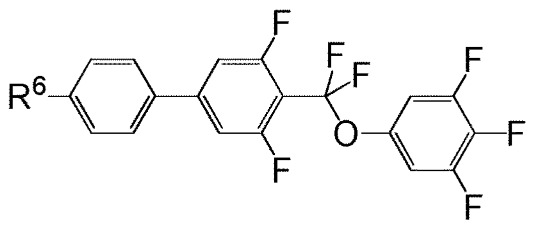

(4-16)

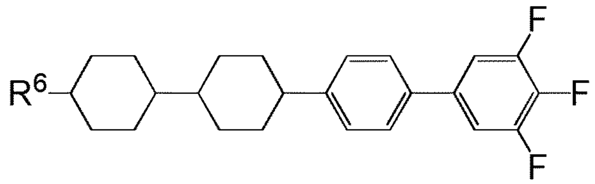

(4-17)

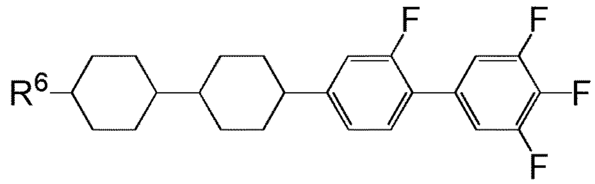

(4-18)

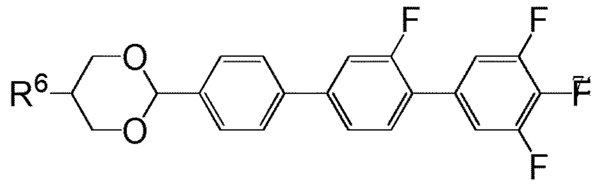

(4-19)

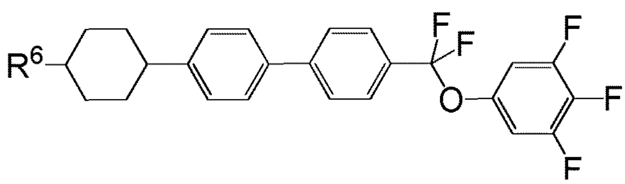

(4-20)

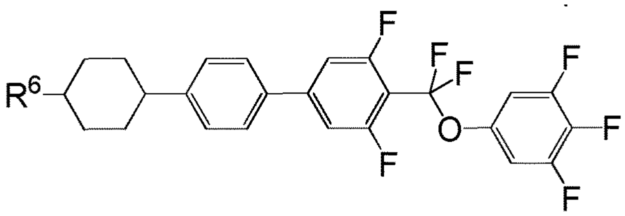

(4-21)

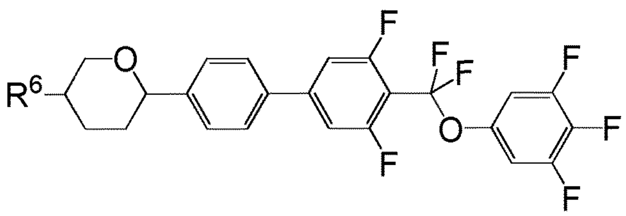

(4-22)

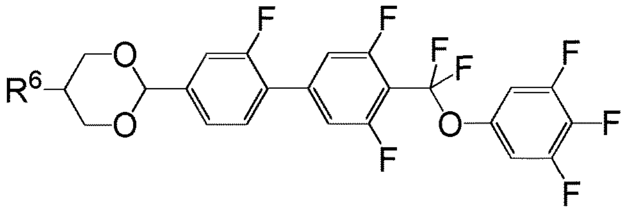

(4-23)

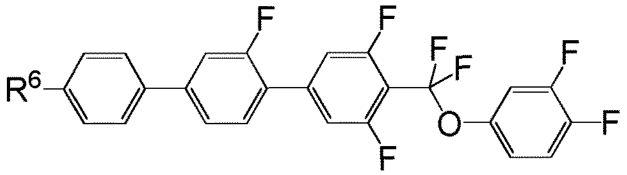

(4-24)

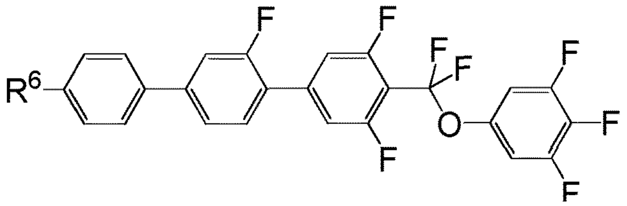

(4-25)

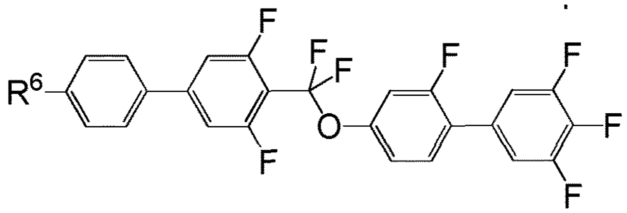

(4-26)

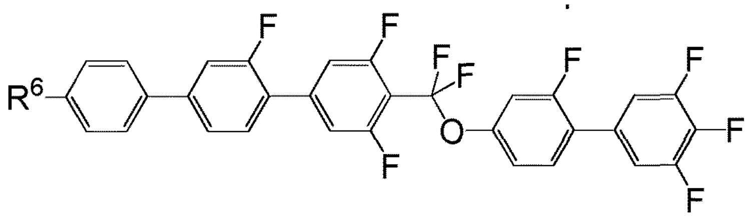

(4-27)

wobei, in Formel (4-1) bis Formel (4-27),
$R^6$ Alkyl mit 1 bis 12 Kohlenstoffatomen, Alkoxy mit 1 bis 12 Kohlenstoffatomen oder Alkenyl mit 2 bis 12 Kohlenstoffatomen ist.

**9.** Die Flüssigkristallzusammensetzung gemäß Anspruch 7 oder 8, wobei der Anteil an der vierten Verbindung im Bereich von 10 Gew.-% bis 60 Gew.-%, basierend auf dem Gewicht der Flüssigkristallzusammensetzung, liegt.

**10.** Die Flüssigkristallzusammensetzung gemäß einem der Ansprüche 1 bis 9, wobei die maximale Temperatur der nematischen Phase 70 °C oder höher ist, die optisch Anisotropie (gemessen bei 25 °C) bei einer Wellenlänge von 589 Nanometern 0,07 oder mehr beträgt und die dielektrische Anisotropie (gemessen bei 25 °C) bei einer Frequenz von 1 kHz 2 oder mehr beträgt.

**11.** Eine Flüssigkristallanzeigevorrichtung, enthaltend die Flüssigkristallzusammensetzung gemäß einem der Ansprüche 1 bis 10.

**12.** Die Flüssigkristallanzeigevorrichtung gemäß Anspruch 11, wobei der Betriebsmodus der Flüssigkristallanzeigevorrichtung einen TN-Modus, einen ECB-Modus, einen OCB-Modus, einen IPS-Modus, einen FFS-Modus oder einen FPA-Modus einschließt und der Treibermodus in der Flüssigkristallanzeigevorrichtung einen Activ-Matrix-Modus einschließt.

**13.** Verwendung der Flüssigkristallzusammensetzung gemäß einem der Ansprüche 1 bis 10 in einer Flüssigkristallanzeigevorrichtung.

## Revendications

**1.** Composition à base de cristaux liquides ayant une phase nématique et incluant au moins un composé sélectionné dans le groupe de composés représentés par la formule (1) comme premier composant et au moins un composé sélectionné dans le groupe de composés représentés par la formule (2) comme second composant :

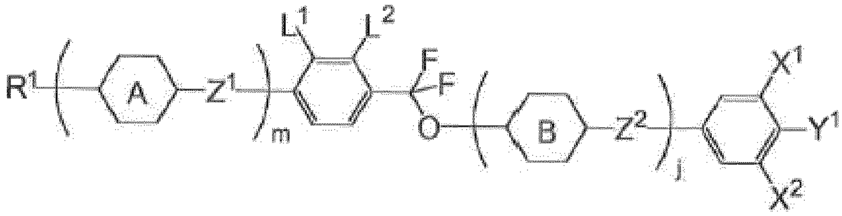

(1)

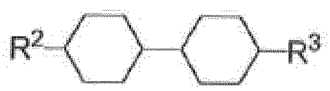

(2)

dans laquelle, dans la formule (1) et la formule (2), $R^1$ ou $R^2$ sont de façon indépendante un alkyle ayant de 1 à 12 carbones, un alkoxy ayant de 1 à 12 carbones ou un alkényle ayant de 2 à 12 carbones ; $R^3$ est un alkényle ayant de 2 à 12 carbones, ou un alkényle ayant de 2 à 12 carbones dans lequel au moins un hydrogène est remplacé par le fluor ; l'anneau A ou l'anneau B sont de façon indépendante le 1,4-cyclohexylène, le 1,4-phénylène, le 2-fluoro-1,4-phénylène, le 2,3-difluoro-1,4-phénylène, le 2,6-difluoro-1,4-phénylène, la pyrimidine-2,5-diyl, le 1,3-dioxane-2,5-diyl ou la tétrahydropyrane-2,5-diyl ; $Z^1$ ou $Z^2$ sont de façon indépendante une liaison unique, l'éthylène, le vinylène, le méthyleneoxy, le carbonyloxy ou le difluorométhyleneoxy ; $L^1$ ou $L^2$ sont de façon indépendante le fluor ou le chlore ; $X^1$ ou $X^2$ sont de façon indépendante l'hydrogène ou le fluor ; $Y^1$ est le fluor, le chlore, un alkyle ayant de 1 à 12 carbones dans lequel au moins un hydrogène est remplacé par un halogène ou un alkoxy ayant de 1 à 12 carbones dans lequel au moins un hydrogène est remplacé par un halogène ; et m ou j sont de façon indépendante 0, 1, 2 ou 3, et une somme de m et j est 3 ou moins.

**2.** Composition à base de cristaux liquides selon la revendication 1, contenant au moins un composé sélectionné dans le groupe de composés représentés par la formule (1-1) à la formule (1-14) comme premier composant :

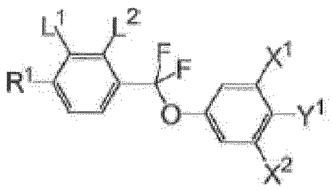

(1-1)

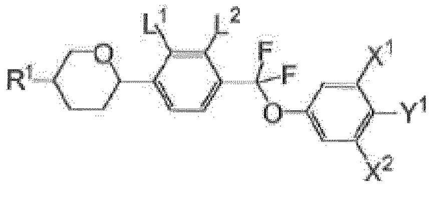

(1-2)

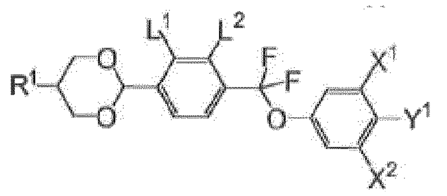

(1-3)

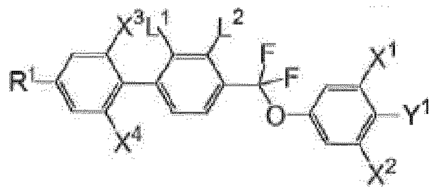

(1-4)

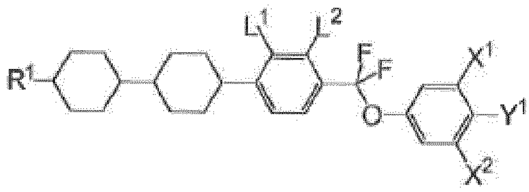

(1-5)

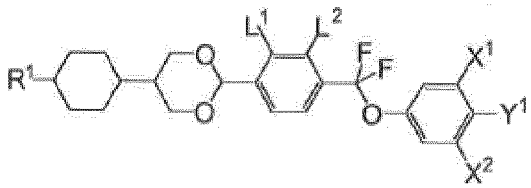

(1-6)

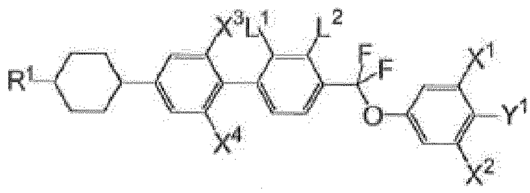

(1-7)

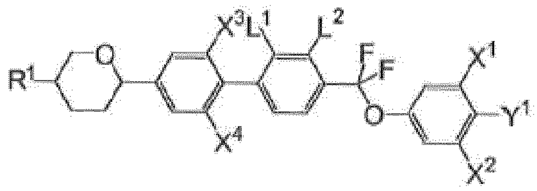

(1-8)

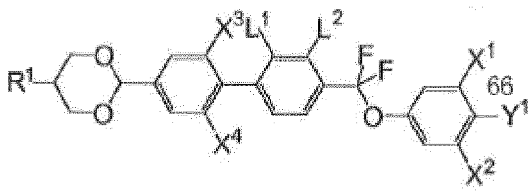

(1-9)

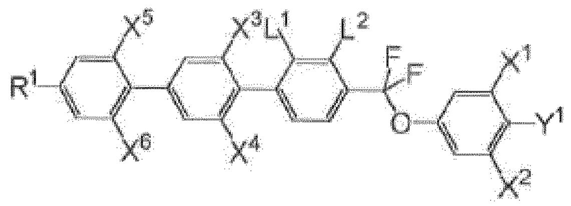

(1-10)

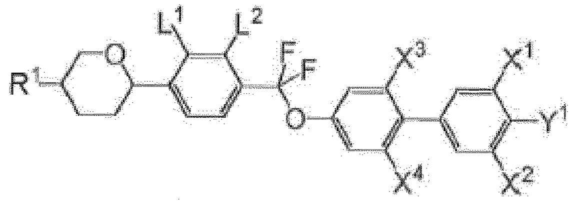

(1-11)

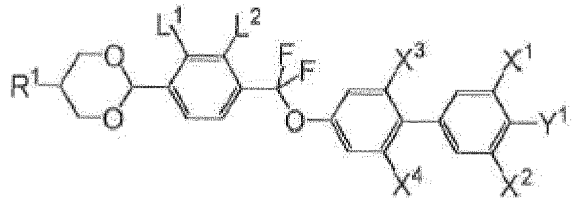

(1-12)

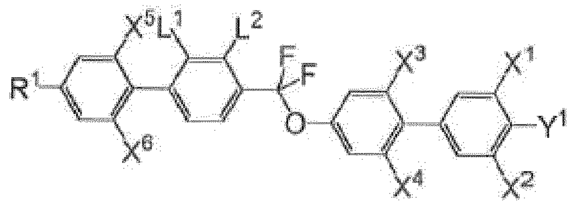

(1-13)

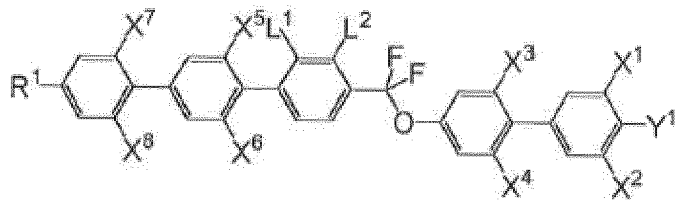

(1-14)

dans laquelle, dans la formule (1-1) à la formule (1-14), $R^1$ est un alkyle ayant de 1 à 12 carbones, un alkoxy ayant de 1 à 12 carbones ou un alkényle ayant de 2 à 12 carbones, $L^1$ ou $L^2$ sont de façon indépendante le fluor ou le chlore ; $X^1$, $X^2$, $X^3$, $X^4$, $X^5$, $X^6$, $X^7$ ou $X^8$ sont de façon indépendante l'hydrogène ou le fluor ; et $Y^1$ est le fluor, le chlore, un alkyle ayant de 1 à 12 carbones dans lequel au moins un hydrogène est remplacé par un halogène ou un alkoxy ayant de 1 à 12 carbones dans lequel au moins un hydrogène est remplacé par un halogène.

**3.** Composition à base de cristaux liquides selon la revendication 1 ou 2, dans laquelle un ratio du premier composant se situe dans la plage de 5% en poids à 40% en poids, et un ratio du second composant se situe dans la plage de 15% en poids à 60% en poids, sur la base du poids de la composition de cristal liquide.

**4.** Composition à base de cristaux liquides selon l'une quelconque des revendications 1 à 3, contenant au moins un composé sélectionné à partir du groupe de composés représentés par la formule (3) comme troisième composant :

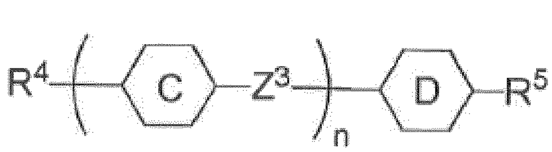

(3)

dans laquelle, dans la formule (3), $R^3$ et $R^4$ sont de façon indépendante un alkyle ayant de 1 à 12 carbones, un alkoxy ayant de 1 à 12 carbones, un alkényle ayant de 2 à 12 carbones, ou un alkényle ayant de 2 à 12 carbones dans lequel au moins un hydrogène est remplacé par le fluor ; l'anneau C ou l'anneau D sont de façon indépendante le 1,4-cyclohexylène, le 1,4-phénylène, le 2-fluoro-1,4-phénylène ou le 2,5-difluoro-1,4-phénylène ; Z3 est une liaison unique, l'éthylène ou le carbonyloxy, et n est 1, 2 ou 3 ; et toutefois, lorsque n est 1, l'anneau C est le 1,4-phénylène.

**5.** Composition à base de cristaux liquides selon l'une quelconque des revendications 1 à 4, contenant au moins un composé sélectionné à partir du groupe de composés représentés par la formule (3-1) à la formule (3-12) comme troisième composant :

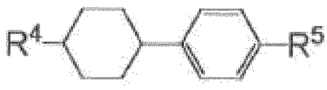

(3-1)

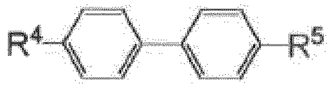

(3-2)

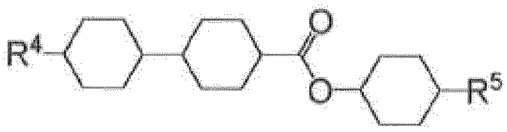

(3-3)

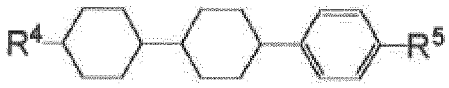

(3-4)

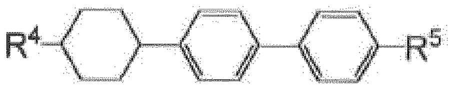

(3-5)

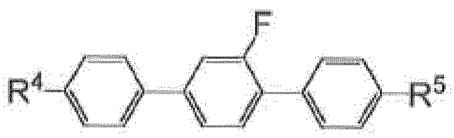

(3-6)

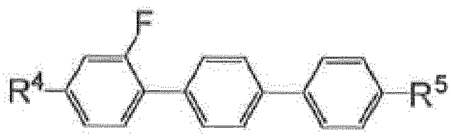

(3-7)

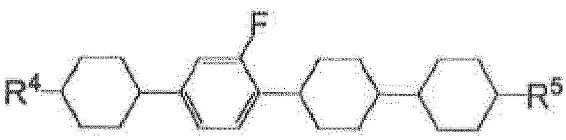

(3-8)

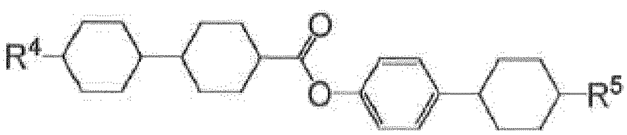

(3-9)

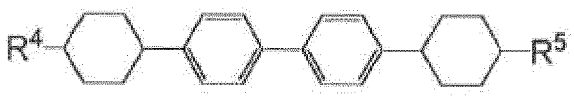

(3-10)

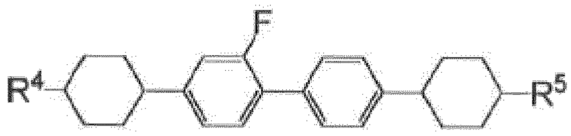

(3-11)

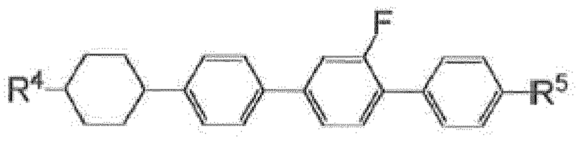

(3-12)

dans laquelle, dans la formule (3-1) à la formule (3-12), $R^4$ ou $R^5$ sont de façon indépendante un alkyle ayant de 1 à 12 carbones, un alkoxy ayant de 1 à 12 carbones, un alkényle ayant de 2 à 12 carbones, ou un alkényle ayant de 2 à 12 carbones dans lequel au moins un hydrogène arbitraire est remplacé par le fluor.

**6.** Composition à base de cristaux liquides selon la revendication 4 ou 5, dans laquelle un ratio du troisième composant se situe dans la plage de 5% en poids à 35% en poids sur la base du poids de la composition de cristal liquide.

**7.** Composition à base de cristaux liquides selon l'une quelconque des revendications 1 à 6, contenant au moins un composé sélectionné à partir du groupe de composés représentés par la formule (4) comme quatrième composant :

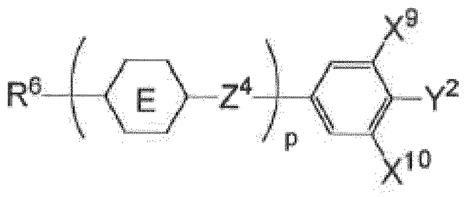

(4)

dans laquelle, dans la formule (4), $R^6$ est un alkyle ayant de 1 à 12 carbones, un alkoxy ayant de 1 à 12 carbones ou un alkényle ayant de 2 à 12 carbones ; l'anneau E est le 1,4-cyclohexylène, le 1,4-phénylène, le 2-fluoro-1,4-phénylène, le 2,6-difluoro-1,4-phénylène, la pyrimidine-2,5-diyl, le 1,3-dioxane-2,5-diyl ou la tétrahydropyrane-2,5-diyl ; $Z^4$ est une liaison unique, l'éthylène, le carbonyloxy ou le difluorométhyleneoxy ; $X^9$ ou $X^{10}$ sont de façon indépendante l'hydrogène ou le fluor ; $Y^2$ est le fluor, le chlore, un alkyle ayant de 1 à 12 carbones dans lequel au moins un hydrogène est remplacé par un halogène ou un alkoxy ayant de 1 à 12 carbones dans lequel au moins un hydrogène est remplacé par un halogène ; et p est 1, 2, 3 ou 4.

**8.** Composition à base de cristaux liquides selon l'une quelconque des revendications 1 à 7, contenant au moins un composé sélectionné à partir du groupe de composés représentés par la formule (4-1) à la formule (4-27) comme quatrième composant :

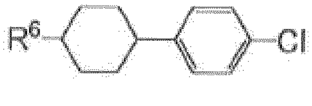

(4-1)

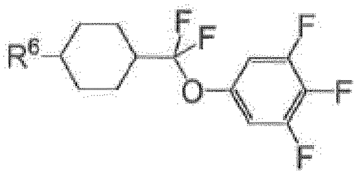

(4-2)

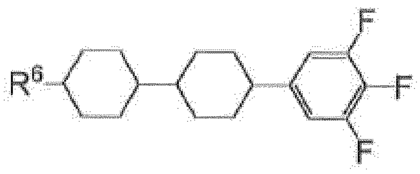

(4-3)

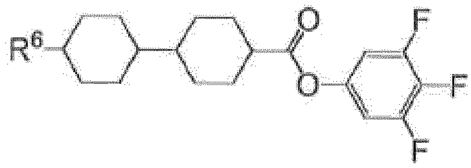

(4-4)

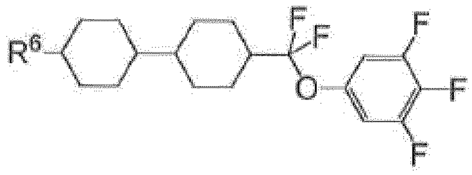

(4-5)

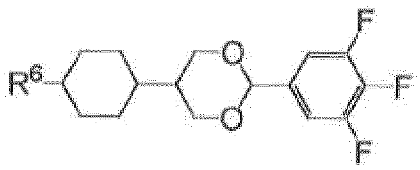

(4-6)

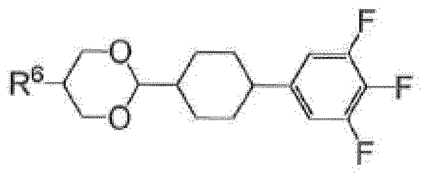

(4-7)

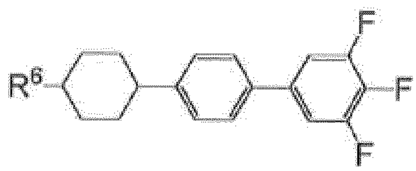

(4-8)

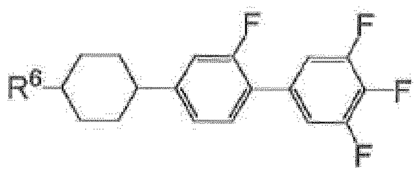

(4-9)

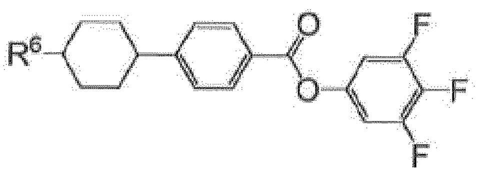

(4-10)

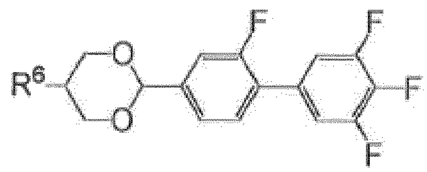

(4-11)

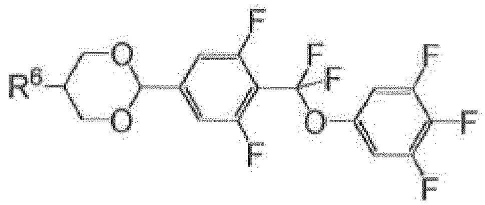

(4-12)

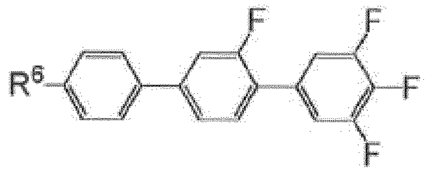

(4-13)

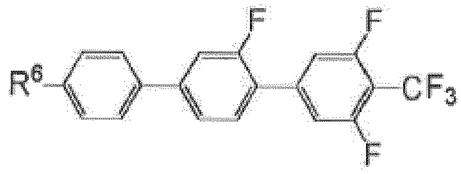

(4-14)

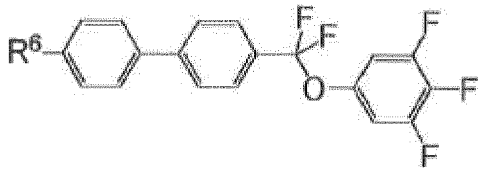

(4-15)

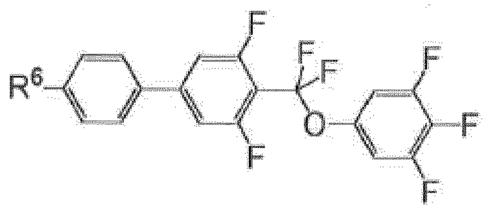

(4-16)

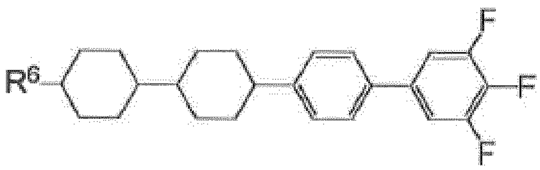

(4-17)

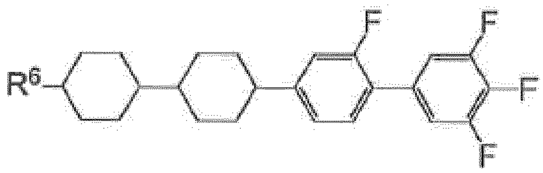

(4-18)

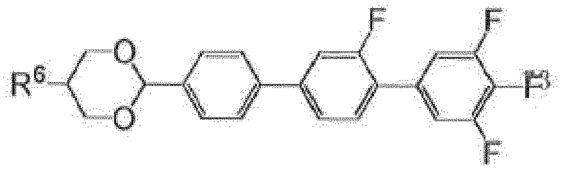

(4-19)

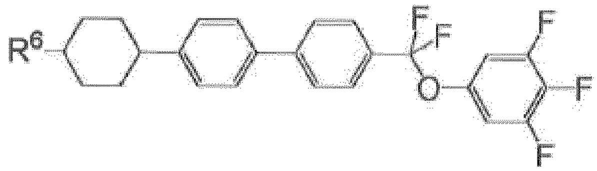

(4-20)

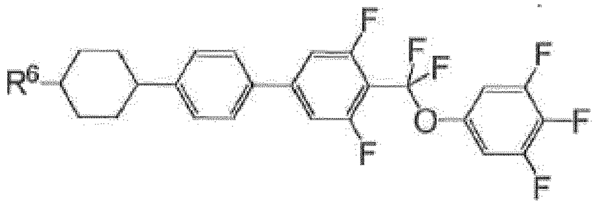

(4-21)

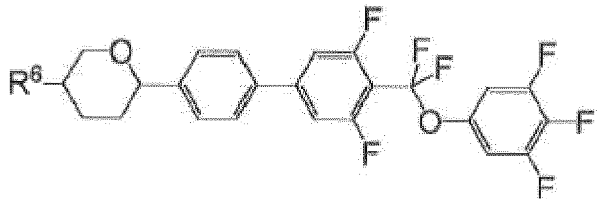

(4-22)

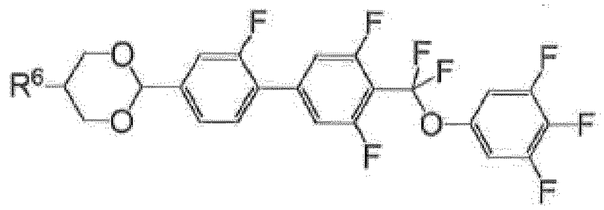

(4-23)

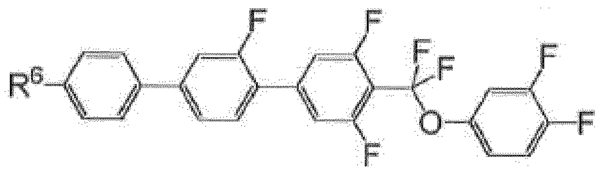

(4-24)

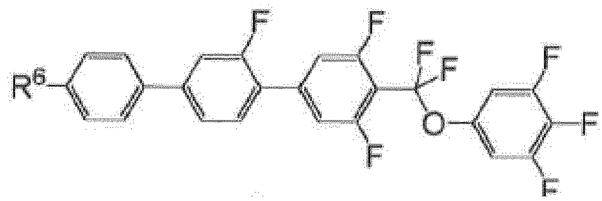

(4-25)

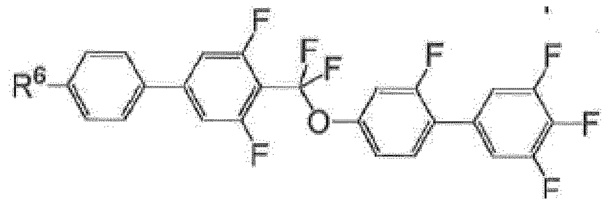

(4-26)

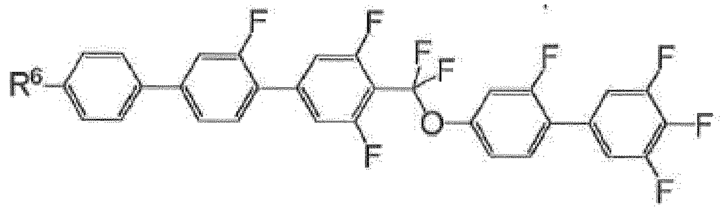

(4-27)

dans laquelle, dans la formule (4-1) à la formule (4-27), $R^6$ est un alkyle ayant de 1 à 12 carbones, un alkoxy ayant de 1 à 12 carbones ou un alkényle ayant de 2 à 12 carbones.

**9.** Composition à base de cristaux liquides selon la revendication 7 ou 8, dans laquelle un ratio du quatrième composant se situe dans la plage de 10% en poids à 60% en poids sur la base du poids de la composition de cristal liquide.

**10.** Composition à base de cristaux liquides selon la revendication 1 à 9, dans laquelle une température maximale de la phase nématique est de 70°C ou plus, une anisotropie optique (mesurée à 25°C) à une longueur d'onde de 589 nm est de 0,07 ou plus, et une anisotropie diélectrique (mesurée 25°C) à une fréquence de 1 kHz est de 2 ou plus.

**11.** Dispositif d'affichage à base de cristaux liquides incluant la composition à base de cristaux liquides selon l'une quelconque des revendications 1 à 10.

**12.** Composition à base de cristaux liquides selon la revendication 11, dans laquelle le mode de fonctionnement du dispositif d'affichage à base de cristaux liquide inclut un mode TN, un mode ECB, un mode OCB, un mode IPS, un mode FFS ou un mode FPA, et un mode d'excitation du dispositif d'affichage à base de cristaux liquide inclut un mode de matrice active.

**13.** Utilisation de la composition de cristal liquide selon l'une quelconque des revendications 1 à 10 dans un dispositif d'affichage à base de cristaux liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060204674 A1
- US 20080142758 A1
- US 20110309301 A1
- US 20070228329 A1
- WO 199611897 A1
- JP 2001139511 A
- JP S59176221 A
- JP H2237949 A
- JP H2233626 A
- US 3660505 B


### Non-patent literature cited in the description


- Organic Syntheses. John Wiley & Sons, Inc,
- Organic Reactions. John Wiley & Sons, Inc,
- Comprehensive Organic Synthesis. Pergamon Press
- **SHIN JIKKEN KAGAKU KOZA.** New Experimental Chemistry Course. Maruzen Co., Ltd,
- **M. IMAI et al.** *Molecular Crystals and Liquid Crystals,* 1995, vol. 259, 37
- Handbook of Liquid Crystals (Ekisho Binran in Japanese). Maruzen Co., Ltd, 2000, 196